# EUROPEAN PATENT APPLICATION

(11) **EP 4 787 757 A1**
(43) Date of publication of application: **05.08.2026**
(21) Application number: 24869712.0
(22) Date of filing: 30.04.2024
(51) Int. Cl.: H04L 5/00, H04W 24/00

(54) **REFERENCE SIGNAL INFORMATION ACQUISITION METHOD AND APPARATUS**

(30) Priority: 28.09.2023 CN 202311285084
(71) Applicant: Datang Mobile Communications Equipment Co., Ltd., Beijing 100085 (CN)
(72) Inventor: WANG, Junwei, Beijing 100085 (CN)
(74) Representative: Studio Torta S.p.A.
(86) International application number: PCT/CN2024/091017
(87) International publication number: WO 2025/066144

(57) **Abstract**

A reference signal information acquisition method and apparatus. The method comprises: searching a reference signal sent by a first system device to obtain reference signal information; and sending the reference signal information to a second system network side device accessed by a terminal, wherein the reference signal can be used for sensing measurement for a second system.

## Description

### CROSS-REFERENCES TO RELATED APPLICATIONS

The present application claims priority to Chinese application No. 202311285084.3 filed on September 28, 2023, entitled "Reference Signal Information Acquisition Method and Apparatus", which is hereby incorporated by reference in its entirety.

### FIELD

The present application relates to the field of radio communication, and in particular, to methods and apparatuses for obtaining reference signal information.

### BACKGROUND

In integrated sensing and communication (ISAC), bistatic sensing is an important sensing mode for a sensing procedure. The bistatic sensing refers to that a sensing signal is transmitted from one station (such as a base station), and a reflected sensing signal is received and measured by another node (such as a user equipment (UE) end).

For a base station-terminal bistatic sensing mode, a base station needs to configure a sensing signal for a terminal, and the terminal performs sensing measurement based on the configured sensing signal. The sensing signal received by the terminal reaches the terminal after being reflected by a sensing object, and has a weak signal strength. Therefore, it is required that the base station transmitting the sensing signal and the terminal have a close distance, so that the terminal may receive a sufficiently strong reflected signal, which is conducive to measuring the sensing signal.

However, for an indoor sensing scenario, a base station configuring a sensing signal is usually deployed outdoors, and is far away from an indoor terminal, resulting in a weak sensing signal received by the terminal. Moreover, the sensing signal is blocked by walls or glass, which further weakens the signal, and the accuracy of a sensing measurement result is low. In severe cases, a scheduled sensing measurement task cannot be completed.

### BRIEF SUMMARY

Embodiments of the present application provide methods and apparatuses for obtaining reference signal information, which solve the defect in the related art that an accuracy of a sensing measurement result is low due to a sensing signal received by a terminal being weak, which improves the accuracy of the sensing measurement result.

An embodiment of the present application provides a method for obtaining reference signal information, performed by a terminal, including:
searching a reference signal transmitted from a first system device to obtain reference signal information; and
transmitting the reference signal information to a second system network side device accessed by the terminal,
where the reference signal is used for a sensing measurement for a second system.

According to the method for obtaining the reference signal information provided by an embodiment of the present application, the reference signal information includes one or more of the following:
standard information of the first system;
bandwidth information of the first system;
frequency band information of the first system;
a network identification number of the first system;
quality information of a reference signal from the first system; or
periodic information of a reference signal from the first system.

According to the method for obtaining the reference signal information provided by an embodiment of the present application, the first system includes one or more of the following:
a WI-FI system, a Bluetooth system, or a communication system of an operator different from the second system.

According to the method for obtaining the reference signal information provided by an embodiment of the present application, the method further includes:
transmitting sensing measurement capability information to the second system network side device, where the sensing measurement capability information includes sensing measurement capability of the terminal for the first system.

According to the method for obtaining the reference signal information provided by an embodiment of the present application, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

According to the method for obtaining the reference signal information provided by an embodiment of the present application, the method further includes:
receiving search request information transmitted from the second system network side device, where the search request information is used to indicate the terminal to search a reference signal transmitted from the first system.

According to the method for obtaining the reference signal information provided by an embodiment of the present application, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

According to the method for obtaining the reference signal information provided by an embodiment of the present application, the search request information is carried in one or more of the following:
high layer signaling, physical layer signaling, or application layer data.

According to the method for obtaining the reference signal information provided by an embodiment of the present application, the method further includes:
searching a reference signal transmitted from the first system based on default search information.

According to the method for obtaining the reference signal information provided by an embodiment of the present application, searching the reference signal transmitted from the first system device to obtain the reference signal information includes:
in case that a trigger condition is satisfied, searching the reference signal transmitted from the first system device to obtain the reference signal information,
where the trigger condition includes one or more of the following:
   a signal quality of the second system network side device received by the terminal is lower than a first threshold; or
   a signal quality of a source sensing signal of the second system network side device received by the terminal is lower than a second threshold.

According to the method for obtaining the reference signal information provided by an embodiment of the present application, the method further includes:
receiving auxiliary information transmitted from the second system network side device, where the auxiliary information is used to indicate to discover a to-be-searched first system.

According to the method for obtaining the reference signal information provided by an embodiment of the present application, the method further includes:
receiving sensing measurement configuration information transmitted from the second system network side device; and
performing sensing measurement on a reference signal transmitted from the first system based on the sensing measurement configuration information.

An embodiment of the present application further provides a method for obtaining reference signal information, performed by a second system network side device accessed by a terminal, including:
receiving reference signal information transmitted from the terminal after searching a reference signal transmitted from a first system device,
where the reference signal is used for a sensing measurement for a second system.

According to the method for obtaining the reference signal information provided by an embodiment of the present application, the reference signal information includes one or more of the following:
standard information of the first system;
bandwidth information of the first system;
frequency band information of the first system;
a network identification number of the first system;
quality information of a reference signal from the first system; or
periodic information of a reference signal from the first system.

According to the method for obtaining the reference signal information provided by an embodiment of the present application, the first system includes one or more of the following:
a WI-FI system, a Bluetooth system, or a communication system of an operator different from the second system.

According to the method for obtaining the reference signal information provided by an embodiment of the present application, the method further includes:
receiving sensing measurement capability information transmitted from the terminal, where the sensing measurement capability information includes sensing measurement capability of the terminal for the first system.

According to the method for obtaining the reference signal information provided by an embodiment of the present application, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

According to the method for obtaining the reference signal information provided by an embodiment of the present application, the method further includes:
transmitting search request information, where the search request information is used to indicate the terminal to search a reference signal transmitted from a first system.

According to the method for obtaining the reference signal information provided by an embodiment of the present application, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

According to the method for obtaining the reference signal information provided by an embodiment of the present application, the search request information is carried in one or more of the following:
high layer signaling, physical layer signaling, or application layer data.

According to the method for obtaining the reference signal information provided by an embodiment of the present application, the method further includes:
transmitting auxiliary information to the terminal, where the auxiliary information is used to assist the terminal in discovering a to-be-searched first system.

According to the method for obtaining the reference signal information provided by an embodiment of the present application, the method further includes:
transmitting sensing measurement configuration information to the terminal.

An embodiment of the present application further provides a terminal, including a memory, a transceiver and a processor,
where the memory is used to store a computer program, the transceiver is used to transmit and receive data under control of the processor, and the processor is used to read the computer program in the memory and perform steps of the method for obtaining the reference signal information described above.

An embodiment of the present application further provides a network side device, including a memory, a transceiver and a processor,
where the memory is used to store a computer program, the transceiver is used to transmit and receive data under control of the processor, and the processor is used to read the computer program in the memory and perform steps of the method for obtaining the reference signal information described above.

An embodiment of the present application further provides a computer-readable storage medium, where the computer-readable storage medium stores a computer program, and the computer program is used to cause a computer to perform steps of the methods for obtaining reference signal information described above.

In the methods and apparatuses for obtaining reference signal information provided by embodiments of the present application, by actively searching the reference signal from the first system, the terminal obtains the reference signal information, and transmits the reference signal information for the first system to the second system network side device accessed by the terminal for the second system to perform the sensing measurement, thereby avoiding the defect that the accuracy of the sensing measurement result is low due to the reference signal for the second system network side device accessed by the terminal being weak when arriving at the terminal, effectively improving the accuracy of the sensing measurement result, and reducing radio resources used, by the second system network side device accessed by the terminal, for transmitting the sensing signal.

### BRIEF DESCRIPTION OF THE DRAWINGS

In order to more clearly illustrate the solutions disclosed in the embodiments of the present application, the drawings used in the description of the embodiments are briefly described below. The drawings in the following description are only some embodiments of the present application, and other drawings may be obtained according to these drawings without any creative work for those skilled in the art.
FIG. 1 is a classification schematic diagram of bistatic sensing and monostatic sensing in the related art;
FIG. 2 is a schematic flowchart of sensing measurement in the related art;
FIG. 3 is a schematic diagram of a user equipment (UE) receiving a reference signal in the related art;
FIG. 4 is a first schematic flowchart of a method for obtaining reference signal information according to an embodiment of the present application;
FIG. 5 is a deployment diagram of a sensing scenario according to an embodiment of the present application;
FIG. 6 is a second schematic flowchart of a method for obtaining reference signal information according to an embodiment of the present application;
FIG. 7 is a third schematic flowchart of a method for obtaining reference signal information according to an embodiment of the present application;
FIG. 8 is a schematic structural diagram of a terminal according to an embodiment of the present application;
FIG. 9 is a schematic structural diagram of a network side device according to an embodiment of the present application;
FIG. 10 is a first schematic flowchart of an apparatus for obtaining reference signal information according to an embodiment of the present application; and
FIG. 11 is a second schematic flowchart of an apparatus for obtaining reference signal information according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network side device, and may further include a core network part, such as an evolved packet system (EPS), a 5G system (5GS), and the like.

First, the following contents are introduced.

### (1) Basic concepts of integrated sensing and communication (ISAC).

The basic idea of ISAC is to introduce a function of wireless sensing in wireless mobile communications. The wireless sensing refers to that environmental information is sensed through a wireless signal. Environmental information includes the distribution, size, quantity and temperature of an object in the environment, movements and behaviors, and even breathing frequency and heart rate of human. The principle of wireless sensing is that a wireless signal is transmitted to to-be-sensed environment, and the wireless signal (which is reflected and scattered by environment and transmitted in multiple paths) is collected simultaneously at a receiving end. Since the collected wireless signal has interacted with the environment, environmental information is therefore carried in the wireless signal. After the signal is received, complex signal processing is performed, characteristics of the environment may be obtained. The sensed environment including identified human and objects in the environment, searched temperature, searched movements, and even breathing frequency and heart rate of the human, etc. may be reconstructed on a computer. The wireless sensing is applied to the fields of personnel health search, security, etc.

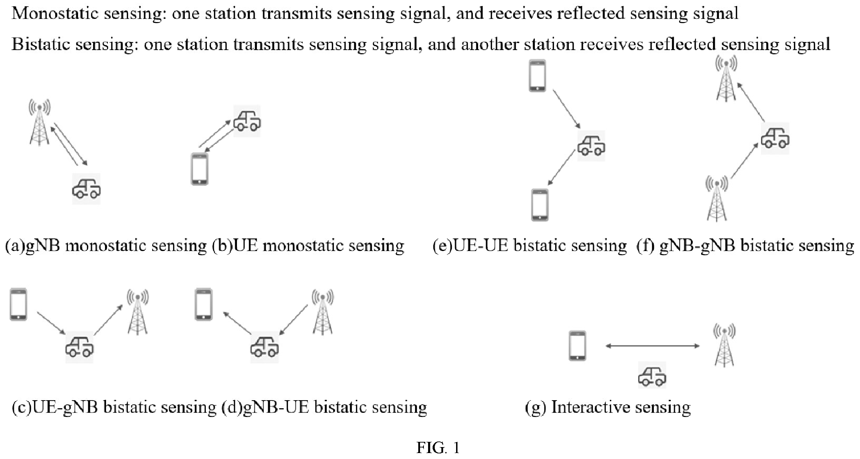

The wireless sensing is usually divided into: monostatic sensing and bistatic sensing. FIG. 1 is a classification schematic diagram of bistatic sensing and monostatic sensing in the related art. As shown in FIG. 1, the monostatic sensing includes: base station monostatic sensing and terminal monostatic sensing. The bistatic sensing includes: user equipment (UE)-UE, the next generation node B (gNB)-gNB, UE-gNB, and gNB-UE. The monostatic sensing refers to that a base station (or a terminal) actively transmitting a sensing signal, and the reflected sensing signal is reflected by a sensing object and then received by the base station (or the terminal) The bistatic sensing refers to that the base station (or the terminal) actively transmits a sensing signal, and the sensing signal is received by the terminal (or the base station) after passing through a wireless channel.

### (2) Procedure of obtaining a sensing signal resource.

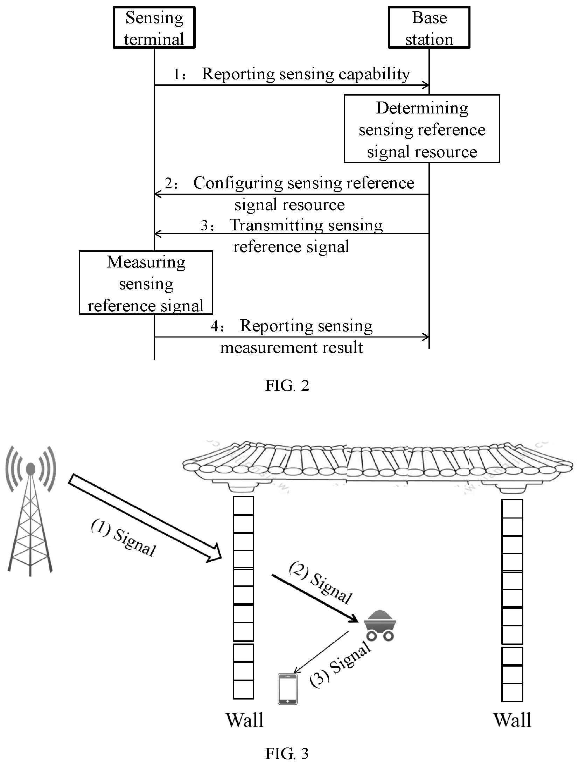

For the bistatic sensing, when sensing measurement is performed at a UE end, the gNB needs to transmit sensing measurement configuration to the UE. FIG. 2 is a schematic flowchart of a sensing measurement in the related art. As shown in FIG. 2, the following steps are included.

Step 1: the terminal reports a sensing capability to the base station.

The reporting of the sensing capability is for the gNB to determine a UE sensing capability, and sensing configuration of the UE is determined based on the UE sensing capability. UE sensing capabilities may be divided into a sensing-related capability and a UE radio capability. Examples are given below.

The UE sensing capability: supporting sensing measurement result, such as measuring a departure angle/an arrival angle, delay; and supporting for calculating a sensing result, such as a target distance, a speed and an angle.

The UE radio capability: supporting a bandwidth of receive/transmit signal, a processing capability, etc.

Step 2: a sensing reference signal is configured.

The base station determines a sensing reference signal resource (such as time domain information, frequency domain information, transmission power, etc.) in combination with capabilities reported by the UE and quality requirements of a sensing service, and transmits configuration information of the sensing reference signal resource to the terminal.

Step 3: the base station transmits a sensing reference signal.

The base station transmits the sensing reference signal at a certain power on a corresponding frequency domain resource or a corresponding time domain resource based on the information configured to the UE.

Step 4: the sensing measurement result is reported.

The terminal performs the sensing measurement based on the resource configuration information of the sensing reference signal, and reports the measurement result to the base station.

In current communication systems, base stations are mostly deployed outdoors. Although the standard supports deployment of micro base stations indoors to achieve indoor coverage, most of the indoor coverage is still achieved by allowing a signal of an outdoor base station to penetrate through a wall or a window and enter the room.

FIG. 3 is a schematic diagram of a UE receiving a reference signal in the related art. As shown in FIG. 3, for an indoor sensing scenario, if the sensing reference signal is transmitted from an outdoor base station, the sensing mode is a bistatic mode, that is, the base station transmits a sensing reference signal (1), which passes through the wall to obtain a reference sensing signal (2). The reference sensing signal (2) is reflected by the sensing object to obtain a reference sensing signal (3). The terminal receives the sensing reference signal, and the sensing reference signal path is as follows.
(1) The sensing signal is transmitted from the base station and reaches the wall after experiencing path attenuation.
(2) The signal passes through the wall to reach the indoor, and the signal experiences wall penetration loss. Meanwhile, the signal reaches the sensing object and experiences path attenuation.
(3) The signal is reflected by the sensing object and reaches a receiving end UE.

Compared to an outdoor scenario, the sensing reference signal has experienced a procedure of wall penetration, that is, the sensing reference signal has experienced penetration loss, which will cause the sensing signal received by the UE to be further attenuated and weakened. Walls of different materials have different penetration losses. The penetration loss values of commonly used wall materials are shown in table 1 below.

**Table 1: penetration loss values of different wall materials**

| Material | Penetration loss formula [dB] | Penetration loss value [dB], *f* = 3*G* |
|---|---|---|
| Standard multi-pane glass | *L_{glass} =* 2 + 0.2*f* | 2.6 |
| Radiation-proof glass | *L_{IIRglass}* = 23 + 0.3*f* | 23.6 |
| Concrete | *L_{concrete}* = 5 + 4*f* | 17 |
| Wood | *L_{wood}* = 4.85 + 0.12*f* | 5 |

As shown in Table 1, current building is made of concrete, and its penetration loss is about 17 dB, that is, the signal is weakened by 17 dB compared with the signal in an outdoor sensing scenario.

When the UE performs the measurement on the sensing reference signal, the procedure of obtaining the sensing reference signal is configured by the base station where the UE camps, that is, the base station first determines a location of a transmitting resource of the sensing reference signal, and indicates the UE to sense a location of the resource of the reference signal through a configuration message. When the base station is outdoors and the sensing scenario is indoors, especially when an indoor terminal receives the sensing reference signal transmitted from an outdoor base station, the sensing signal will be weakened due to the penetration loss, which will lead to a low accuracy of the sensing measurement result, and the UE cannot effectively complete a sensing measurement task.

The embodiment of the present application provides methods and apparatuses for obtaining reference signal information, which improve the accuracy of the sensing measurement result.

Methods and apparatuses provided by various embodiments of the present application are based on the same application concept. Since the methods and the apparatuses solve problems based on similar principles, the implementation of the apparatuses and the methods can refer to each other, and the same parts will not be repeated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

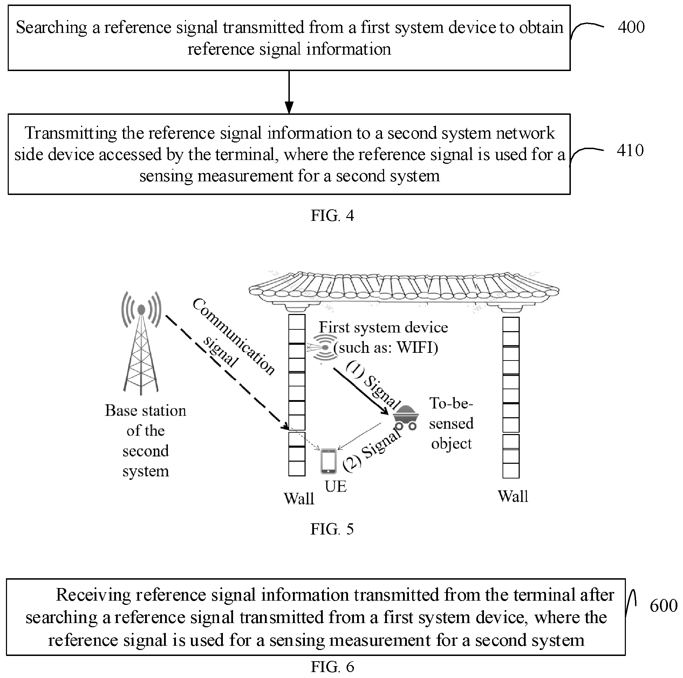

FIG. 4 is a first schematic flowchart of a method for obtaining reference signal information according to an embodiment of the present application. As shown in FIG. 4, the method for obtaining the reference signal information is performed by a terminal, that is, an execution subject of the method for obtaining the reference signal information is the terminal, such as the user equipment (UE). The method for obtaining the reference signal information includes the following steps.

Step 400: searching a reference signal transmitted from a first system device to obtain reference signal information.

In an embodiment, in order to avoid an inaccurate sensing measurement caused by the terminal receiving a weak sensing reference signal transmitted from an outdoor base station where the terminal camps, the terminal may autonomously search for an available sensing reference signal transmitted from another device, where another device is different from the outdoor base station where the terminal camps.

In an embodiment, the terminal autonomously searches for an available reference signal, that is, searches a reference signal from a first system, such as a gNB of another operator deployed near the example terminal or indoors, or a WI-FI device. The terminal may determine a reference signal that may be used for sensing based on a search result, and generate reference signal information. The reference signal information is used to characterize one or more parameters of the reference signal from the first system searched by the terminal.

The autonomously searched reference signal may be: a WI-FI signal, a long term evolution (LTE) signal, an NR signal transmitted from the base station of another operator, a Bluetooth signal, a visible light signal, which is not limited in the embodiments of the present application.

It should be noted that, the reference signal here refers to a known signal or channel data for the terminal, which includes but is not limited to: a pilot signal, a channel quality reference signal, a beacon signal, broadcast data, etc.

Step 410: transmitting the reference signal information to a second system network side device accessed by the terminal

The reference signal is used for a sensing measurement for a second system.

In an embodiment, after searching the reference signal from the first system to obtain the reference signal information, the terminal may transmit the reference signal information to the second system network side device where the terminal camps for the second system to perform the sensing measurement. The sensing measurement here includes but is not limited to: signal energy measurement, signal quality measurement, multipath delay measurement (such as: used for sensing a distance to a to-be-measured object and a position of the to-be-measured object), a Doppler frequency shift measurement (such as: used for sensing a scalar velocity and a vector velocity of the to-be-measured object), and a signal arrival angle measurement.

FIG. 5 is a deployment diagram of a sensing scenario according to an embodiment of the present application. As shown in FIG. 5, the sensing mode is a bistatic mode. The UE is located indoors and performs a sensing measurement task. The to-be-sensed object is also indoors. The gNB (that is, the second system network side device) where the UE camps is located outdoors and is separated from the UE by a wall. One or more WI-FI devices (that is, the first system devices) are deployed indoors. The terminal may search a broadcast signal transmitted from the WI-FI device, i.e., a reference signal (1), and the broadcast signal is obtained after being reflected by the to-be-sensed object, i.e., a reference signal (2). After search, the terminal obtains the reference signal information and transmits it to the gNB where the UE camps.

In an embodiment, when configuring the sensing measurement signal (i.e., the reference signal), the second system network side device may configure the terminal to receive a signal transmitted from another system, such as the first system, and perform the measurement task. A problem of poor quality of a sensing signal transmitted from a serving base station is solved, sensing precision and user satisfaction are improved, and radio resources used by the serving base station for transmitting the sensing signal are reduced.

In the method for obtaining the reference signal information provided by embodiments of the present application, by actively searching the reference signal from the first system, the terminal obtains the reference signal information, and transmits the reference signal information for the first system to the second system network side device accessed by the terminal for the second system to perform sensing measurement, thereby avoiding the defect that the accuracy of the sensing measurement result is low due to the reference signal for the second system network side device accessed by the terminal being weak when arriving at the terminal, effectively improving the accuracy of the sensing measurement result, and reducing radio resources used, by the second system network side device accessed by the terminal, for transmitting the sensing signal.

In an embodiment, the reference signal information includes one or more of the following:
standard information of a first system;
bandwidth information of a first system;
frequency band information of a first system;
a network identification number of a first system;
quality information of a reference signal from a first system; or
periodic information of a reference signal from a first system.

In an embodiment, parameters of the reference signal, i.e., the reference signal information, may include at least one of the following (a1) - (a6).
(a1) The standard information of the first system, which may include the standard information of one or more first systems.
(a2) The bandwidth information of the first system, which may include the bandwidth information of one or more first systems.
(a3) The frequency band information of the first system, which may include the frequency band information of one or more first systems; or, may include the bandwidth information and the corresponding frequency band information of one or more first systems.
(a4) The network identification number of the first system, such as: a public land mobile network (PLMN) of the communication system, or a service set identifier (SSID) of the WI-FI.
(a5) The quality information of the reference signal from the first system, such as: a received signal strength indication (RSSI), or a reference signal received power (RSRP).
(a6) The period information of the reference signal from the first system. In an embodiment, it may include a period value of the reference signal measurement.

In an embodiment, reporting the quality information of the reference signal may be reporting an absolute value or a relative value, such as a relative value relative to a threshold value or a preset reference value indicated by the base station.

In an embodiment, the terminal searches the reference signal from the first system and reports the reference signal information of a candidate first system to the base station. The search procedure of the terminal is performed by the terminal autonomously. The following two modes may be adopted.

Mode 1: the terminal does not store access information of the first system (such as a channel position of a synchronization signal, or time information).

The terminal first searches for the synchronization signal, reads broadcast information, obtains one or more pieces of available reference signal information (such as a signal transmission period, a frequency domain density, or a bandwidth), and measures the reference signal.

Mode 2: the terminal stores access information of the first system (such as the channel position of the synchronization signal, the time information, or a receiving position of the broadcast signal).

The terminal directly searches a broadcast control channel and receives scheduling information, receives and reads the broadcast information based on the scheduling information, obtains one or more pieces of available reference signal information (such as the signal transmission period, the frequency domain density, or the bandwidth), and measures the reference signal.

Examples for a reporting command are as follows.

(b1) The standard information of the first system: NR.

In an embodiment, a version number of the standard may also be reported, such as NR rel-17, NR rel-18.

(b2) The bandwidth information and frequency band information of the first system: such as system bandwidth being 400 MHz; frequency band being band n261.

(b3) The network identification number of the first system: such as PLMN ID=46004.

(b4) The quality information of the reference signal from the first system: a measurement value of a reception indication signal of a measurement signal: such as RSSI=-73 dBm.

(b5) The period information of the reference signal from the first system: such as 40 ms.

In the embodiment of the present application, the bandwidth information of the first system reported by the terminal may refer to a channel bandwidth of the system during communication, or a signal bandwidth that may be used for the sensing measurement. Different reporting may be performed according to needs.

In an embodiment, reporting the quality information of the reference signal from the first system may be reporting an absolute value (as shown in Table 2 below) or a relative value (such as: reporting threshold information relative to the reference signal information indicated by the base station) (as shown in Table 3 below).

**Table 2: RSSI measurement report mapping**

| Reporting value | Measurement precision | Unit |
|---|---|---|
| RSSI_00 | RSSI < -100 | dBm |
| RSSI_01 | -100 ≤ RSSI < -99 | dBm |
| RSSI_02 | -99 ≤ RSSI < -98 | dBm |
| ... | ... | ... |
| RSSI_74 | -27 ≤ RSSI < -26 | dBm |
| RSSI_75 | -26 ≤ RSSI < -25 | dBm |
| RSSI_76 | -25 ≤ RSSI | dBm |

As shown in Table 2, the terminal maps/quantizes the reported value based on the RSSI value of the measured sensing signal and the quantization relationship in Table 2.

**Table 3: RSSI measurement report mapping**

| Reporting value | Measurement precision | Unit |
|---|---|---|
| RSSI_00 | RSSI=threshold 1 | dBm |
| RSSI_01 | threshold 1≤ RSSI < threshold 1+1 | dBm |
| RSSI_02 | threshold 1+1≤ RSSI < threshold 1+2 | dBm |
| ... | ... | ... |
| RSSI_n | threshold 1+n-1≤ RSSI < threshold 1+n | dBm |
| RSSI_n_1 | threshold 1+n ≤ RSSI | dBm |

In an embodiment, the value of threshold 1 is a threshold value indicated by the second system network side device. It may also be agreed by the protocol or obtained through other signaling configurations.

In an embodiment, an increment of adjacent reported values in Table 3 is 1 dB, which is only used as an example. The increment of adjacent reported values may not be limited to this value. For example: it may be 1.5 dB, 2 dB, or 3 dB. In order to reflect flexibility, the increment may be different.

As shown in Table 3, the terminal maps or quantizes the reported value based on the RSSI value of the measured sensing signal and the quantization relationship in the above Table 3.

In an embodiment, the terminal searches the reference signal from the first system and reports the reference signal information of the candidate first system to the second system network side device. The search procedure of the terminal is performed by the terminal autonomously.

Examples for a reporting command are as follows.

(c1) The standard information of the first system: WI-FI.

In an embodiment, the version number of the standard may also be reported, such as 802.11b, 802.11f.

(c2) The bandwidth information and frequency band information of the first system: such as system bandwidth being 160 MHz; frequency band being 6 GHz.

(c3) The network identification number of the first system: such as SSID=chinanet.

(c4) The quality information of the reference signal from the first system: the measurement value of the reception indication signal of the measurement signal: such as RSSI=-73 dBm.

(c5) The period information of the reference signal from the first system: such as 200 ms.

In the embodiment of the present application, the bandwidth information of the first system reported by the terminal may refer to a channel bandwidth of the system during communication, or a signal bandwidth that may be used for the sensing measurement. Different reporting or definition may be performed according to needs.

In an embodiment, reporting the quality information of the reference signal from the first system may be reporting an absolute value (as shown in Table 2 above) or a relative value (such as: reporting threshold information relative to the reference signal information indicated by the base station) (as shown in Table 3 above).

In an embodiment, for a WI-FI system, the terminal may receive a signal from the WI-FI in the following cases.

Class A information: only beacon signals are able to be received. Since beacon signals are unencrypted signals broadcast by the WI-FI, all terminals may receive them, regardless of whether they are legitimate or illegitimate users of access points of the WI-FI.

Class B information: other signals transmitted from WI-FI. For legitimate users of the WI-FI (such as users who know a WI-FI password and may communicate with the WI-FI), in addition to reading beacon signals, data communication related information or other control information may be further read. Compared with class A information, class B information may provide more reference signals of the candidate first system.

Class C information: in an evolved version of the WI-FI, the sensing functions and transmission of sensing signals may be supported. The terminal may receive a sensing signal transmitted from the WI-FI and perform the sensing measurement, that is, the terminal may use the reference signal of the WI-FI to sense and measure the sensing service.

In order to conveniently perform a sensing task issued by the second system network side device, the terminal may report one or more of the above-mentioned class A information, class B information or class C information, so that the second system network side device may make a decision on determining the reference signal.

In an embodiment, the first system includes one or more of the following:
a WI-FI system, a Bluetooth system, or a communication system of an operator different from the second system.

In an embodiment, the first system may be understood as a system different from the system where the terminal camps, such as the terminal camps in an NR-1 system of an operator A, and the first system may be an NR-2 system, LTE system, WI-FI system, etc., of an operator B.

In an embodiment, the first system may also be called an inter-system, or other systems relative to the system currently accessed by the terminal, which is not limited in the embodiments of the present application.

In an embodiment, the method further includes:
transmitting sensing measurement capability information to the second system network side device, where the sensing measurement capability information includes sensing measurement capability of the terminal for the first system.

In an embodiment, the terminal may pre-report the capability to the second system network side device, that is, the sensing measurement capability information of the terminal is transmitted to the second system network side device, such as the sensing measurement capability of the terminal for the first system is reported.

In an embodiment, the terminal reports the sensing measurement capability information, which may include the measurement capability of one first system, or the combination of the measurement capabilities of multiple first systems, or the combination of the measurement capabilities of the current system and multiple first systems.

In an embodiment, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

In an embodiment, the terminal reports the sensing measurement capability information, which may include at least one of the following.

(Capability item 1): a category of the first system for the terminal supporting the sensing measurement, such as the standard information. For example, it may include but is not limited to: WI-FI, Bluetooth, NR, LTE, or PC5 port for D2D.

(Capability item 2): a radio capability of the first system for the terminal supporting the sensing measurement, such as a bandwidth and/or a frequency band supported for receiving signals.

For example, it may include frequency band information: 2.1 GHz or 2.6 GHz or 4.9 GHz, an unlicensed frequency band, or a licensed frequency band.

For example, it may include bandwidth information: channel bandwidth is: 5 MHz, 20 MHz, 40 MHz, 80 MHz, 100 MHz, 400 MHz, or 1 GHz.

(Capability item 3): the reference signal information for the terminal supporting the sensing measurement, that is, the sensing measurement result of the supported first system, which includes one or more of the following.

A sampled value of the reference signal, which may feedback the sampled value of the reference signal obtained by the measurement.

An intermediate value of the reference signal, which may include but is not limited to: measuring a departure angle or an arrival angle, a delay, or a Doppler frequency shift.

A sensing result of the reference signal, which may include but is not limited to a distance to a sensed target, a position, a speed (its scalar value), a speed (its vector value, 2D, or 3D vector), or an angle (vector value, 2D vector, or 3D vector) of the sensed target.

In an embodiment, the sensing capability reporting procedure is used for the gNB of the second system to obtain the sensing measurement capability of the UE. The sensing measurement capability includes the sensing measurement capability of the terminal for the first system. The terminal may report the sensing measurement capability information including at least one of the following.

(Capability item 1): a category of the first system for the terminal supporting the sensing measurement, such as the standard of the first system: NR.

(Capability item 2): a radio capability of the first system for the terminal supporting the sensing measurement, such as a bandwidth and/or a frequency band supported for receiving signals.

For example, it may include frequency band information: n261 (27.5 GHz - 28.35 GHz), or n257 (26.5 GHz - 29.5 GHz).

For example, it may include bandwidth information: channel bandwidth is 100 MHz, or 400 MHz.

(Capability item 3): the reference signal information for the terminal supporting the sensing measurement, that is, the sensing measurement result of the supported first system, which includes at least one of the following.

An intermediate value of the reference signal: a Doppler frequency shift.

In an embodiment, the sensing capability reporting procedure is used for the gNB of the second system to obtain the sensing measurement capability of the UE. The sensing measurement capability includes the sensing measurement capability of the terminal for the first system. The terminal may report the sensing measurement capability information including at least one of the following.

(Capability item 1): a category of the first system for the terminal supporting the sensing measurement, such as the standard of the first system: WI-FI.

(Capability item 2): a radio capability of the first system for the terminal supporting the sensing measurement, such as a bandwidth and/or a frequency band supported for receiving signals.

For example, it may include frequency band information: 6 GHz, or 2.4 GHz.

For example, it may include bandwidth information: channel bandwidth is 80 MHz, 160 MHz.

(Capability item 3): the reference signal information for the terminal supporting the sensing measurement, that is, the sensing measurement result of the supported first system, which includes at least one of the following.

An intermediate value of the measurement signal: a Doppler frequency shift, or a multipath delay.

In an embodiment, in order to conveniently subsequently measure the first system, the terminal may also report the following information.

Reporting supplementary information 1: whether a measurement gap for search is required. This information is used to indicate whether the base station of the second system needs to search a measurement gap when a search measurement task is performed. If the search for the measurement gap is required, during performing the search, the base station of the second system cannot exchange data or information with the terminal.

Reporting supplementary information 2: a duration for search measurement. This information is used to indicate time required by the base station of the second system for performing the search measurement task, which may be several candidate values such as 80 ms, 160 ms, 1024 ms, etc. For example, when the terminal stores access information of the first system, the time required for performing the search measurement task is shorter, otherwise, the time required is longer.

In an embodiment, the method further includes:
receiving search request information transmitted from the second system network side device, where the search request information is used to indicate the terminal to search a reference signal transmitted from a first system.

In an embodiment, after receiving the sensing measurement capability information reported by the terminal, the second system network side device may transmit the search request information to the terminal based on the sensing measurement capability information reported from the terminal, to indicate the terminal to search the reference signal transmitted from the first system.

In an embodiment, the second system network side device may transmit the search request information to the terminal based on the known sensing measurement capability information of the terminal, to indicate the terminal to search the reference signal transmitted from the first system.

In an embodiment, the second system network side device may transmit the search request information to the terminal based on the known prior information of the terminal (such as the first system that can be searched by the terminal presents in the surrounding), to indicate the terminal to search the reference signal transmitted from the first system.

In an embodiment, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

In an embodiment, the search request information transmitted from the second system network side device to the terminal may include at least one of the following.

(d1) The standard information of the first system indicating search for the terminal, which may include one or more standard information of the first system.

(d2) The bandwidth information and/or the frequency band information of the first system indicating search for the terminal, which may include one or more bandwidth values of the first system, or a minimum bandwidth value of system, or a frequency band of the system.

(d3) The expected reporting time of the reference signal information, which indicates the expected time or the latest time for the terminal to report the reference signal information.

(d4) The reporting threshold information of the reference signal information, which indicates the threshold information for the terminal to report the reference signal information, such as indicating an RSSI threshold or an RSRP threshold. The terminal only feeds back the reference signal from the first system that is greater than the RSSI threshold or the RSRP threshold.

(d5) The period threshold of the reference signal used for the sensing measurement, which indicates a maximum period threshold for the terminal to report the reference signal information, such as the period threshold of the reference signal T=100 ms. The terminal only feeds back the reference signal from the first system that is less than the period threshold.

In an embodiment, the second system network side device may transmit search request information to the terminal based on the sensing measurement capability information reported from the terminal, to indicate the terminal to search an NR base station of another operator. The search request information includes one or more of the following information.

(e1) The standard information of the first system indicating search for the terminal: NR.

(e2) The bandwidth information and/or the frequency band information of the first system indicating search for the terminal: 100 MHz, or frequency n261 (27.5 GHz - 28.35 GHz).

(e3) The expected reporting time of the reference signal information, which indicates the expected time or the latest time for the terminal to report the reference signal information: the candidate values may be {80 ms, 200 ms, 500 ms, 1000 ms, 2000 ms}.

(e4) The reporting threshold information of the reference signal information, which indicates that the threshold RSSI=-75 dBm, and the terminal only feeds back the reference signal from the first system that is greater than the threshold.

(e5) The period threshold of the reference signal used for the sensing measurement, which indicates that the maximum period threshold T=40 ms, and the terminal only feeds back the reference signal from the first system that is less than the period threshold.

In an embodiment, the reporting threshold information may be indicated using an absolute value or a relative value. For example, relative to a certain reference signal for the current resident cell, it is greater than a threshold value (such as: greater than 3 dB, or 6 dB). The certain reference signal may be an SSB, a PRS, or a CSI-RS signal.

In an embodiment, the second system network side device may transmit a search request information to the terminal based on the sensing measurement capability information reported from the terminal, to indicate the terminal to search a WI-FI signal. The search request information includes one or more of the following information.

(f1) The standard information of the first system indicating search for the terminal: WI-FI.

(f2) The bandwidth information and/or the frequency band information of the first system indicating search for the terminal: 160 MHz, or frequency being 6 GHz.

(f3) The expected reporting time of the reference signal information, which indicates the expected time or the latest time for the terminal to report the reference signal information: the candidate values are {80 ms, 200 ms, 500 ms, 1000 ms, 2000 ms}.

(f4) The reporting threshold information of the reference signal information, which indicates that the threshold RSSI=-75 dBm, and the terminal only feeds back the reference signal from the first system that is greater than the threshold.

(f5) The period threshold of the reference signal used for the sensing measurement, which indicates that the maximum period threshold T=200 ms, and the terminal only feeds back the reference signal from the first system that is less than the period threshold.

In an embodiment, the reporting threshold information may be indicated using an absolute value or a relative value. For example, relative to a certain reference signal for the current resident cell, it is greater than a threshold value (such as: greater than 3 dB, or 6 dB). The certain reference signal may be an SSB, a PRS, or a CSI-RS signal, which is configured or indicated by the base station, or agreed by the protocol.

In an embodiment, in some application scenarios (such as supermarkets, airports), the WI-FI system is deployed by the operator A. The network side device may indicate search auxiliary information or search signal high priority selection information, so that the UE may quickly perform search and signal source selection. For example, the base station provides frequency band information or SSID information to the terminal.

In an embodiment, the search request information is carried in one or more of the following:
high layer signaling, physical layer signaling, or application layer data.

In an embodiment, the base station triggers the terminal to search the reference signal from the first system through the search request information, which may be triggered by the high layer signaling (such as RRC signaling, OR MAC-CE), or may be triggered by the physical layer signaling, or may be triggered by the application layer data, which is not limited in the embodiments of the present application.

In an embodiment, the method further includes:
searching a reference signal transmitted from the first system based on default search information.

In an embodiment, in signaling indicated by the base station, if one or more pieces of information in the search request information is not included, the terminal may search the reference signal from the first system based on the default search information. The default search information may be determined by the protocol or determined based on the quality requirements of the service.

In an embodiment, searching the reference signal transmitted from the first system device to obtain the reference signal information includes:
in case that a trigger condition is satisfied, searching the reference signal transmitted from the first system device to obtain the reference signal information,
where the trigger condition includes one or more of the following:
   a signal quality of the second system network side device received by the terminal is lower than a first threshold; or
   a signal quality of a source sensing signal of the second system network side device received by the terminal is lower than a second threshold.

In an embodiment, in addition to the base station of the second system indicating the terminal to search the reference signal from the first system, the terminal may also search the reference signal from the first system by itself. The triggering condition may be: the signal quality of the second system network side device received by the terminal is lower than the first threshold, and/or the signal quality of the source sensing signal of the second system network side device received by the terminal is lower than the second threshold.

In an embodiment, the first threshold and the second threshold may be pre-agreed, predefined, or indicated by the second system network side device, which is not limited here.

In an embodiment, the method further includes:
receiving auxiliary information transmitted from the second system network side device, where the auxiliary information is used to indicate to discover a to-be-searched first system.

In an embodiment, the second system network side device may also issue auxiliary data to help the terminal quickly discover the first system, such as: indicating the frequency of the first system, an access bandwidth, or a network service number (PLMN, or SSID), etc.

In an embodiment, in some application scenarios (such as supermarkets, airports), the WI-FI system is deployed by the operator A. The network side device may indicate search auxiliary information or search signal high priority selection information, so that the UE may quickly perform search and signal source selection. For example, the base station provides frequency band information or SSID information to the terminal.

In an embodiment, the method further includes:
receiving sensing measurement configuration information transmitted from the second system network side device; and
performing sensing measurement on a reference signal transmitted from a first system based on the sensing measurement configuration information.

In an embodiment, after the terminal transmits the reference signal information to the second system network side device, the second system network side device may indicate the UE to receive the reference signal transmitted from the first system and perform the measurement task when transmitting the sensing measurement configuration information.

In the embodiment of the present application, a problem of poor quality of a sensing signal transmitted from a serving base station is solved, the sensing precision and the user satisfaction are improved, and radio resources used by the serving base station for transmit the sensing signal are reduced.

FIG. 6 is a second schematic flowchart of a method for obtaining reference signal information according to an embodiment of the present application. As shown in FIG. 6, the method for obtaining the reference signal information is performed by a second system network side device accessed by a terminal, that is, an execution subject of the method for obtaining the reference signal information is the second system network side device accessed by the terminal, such as a base station. The method for obtaining the reference signal information includes the following steps.

Step 600: receiving reference signal information transmitted from the terminal after searching a reference signal transmitted from a first system device.

The reference signal is used for a sensing measurement for a second system.

In an embodiment, in order to avoid an inaccurate sensing measurement caused by the terminal receiving a weak sensing reference signal transmitted from an outdoor base station where the terminal camps, the terminal may autonomously search for a sensing reference signal transmitted from another available device, where another device is different from the outdoor base station where the terminal camps.

In an embodiment, the terminal autonomously searches for an available reference signal, that is, searches a reference signal from a first system, such as a gNB of another operator deployed near the example terminal or indoors, or a WI-FI device. The terminal may determine a reference signal that may be used for sensing based on a search result, and generate reference signal information. The reference signal information is used to characterize one or more parameters of the reference signal from the first system searched by the terminal.

The autonomously searched reference signal may be: a WI-FI signal, a long term evolution (LTE) signal, an NR signal transmitted from the base station of another operator, a Bluetooth signal, a visible light signal, which is not limited in the embodiments of the present application.

It should be noted that, the reference signal here refers to a known signal or channel data for the terminal, which includes but is not limited to: a pilot signal, a channel quality reference signal, a beacon signal, broadcast data, etc.

In an embodiment, after searching the reference signal from the first system and obtains the reference signal information, the terminal may transmit the reference signal information to the second system network side device where the terminal camps for the second system to perform the sensing measurement. The sensing measurement here includes but is not limited to: signal energy measurement, signal quality measurement, multipath delay measurement (such as: used for sensing a distance to a to-be-measured object and a position of the to-be-measured object), a Doppler frequency shift measurement (such as: used for sensing a scalar velocity and a vector velocity of the to-be-measured object), and a signal arrival angle measurement.

As shown in FIG. 5, the sensing mode is a bistatic mode. The UE is located indoors and performs a sensing measurement task. The to-be-sensed object is also indoors. The gNB (that is, the second system network side device) where the UE camps is located outdoors and is separated from the UE by a wall. One or more WI-FI devices (that is, the first system devices) are deployed indoors. The terminal may search the reference signal transmitted from the WI-FI device, obtain the reference signal information, and transmit it to the gNB where the UE camps.

In an embodiment, when configuring the sensing measurement signal, the second system network side device may configure the terminal to receive a signal transmitted from another system, such as the first system, and perform the measurement task. A problem of poor quality of a sensing signal transmitted from a serving base station is solved, the sensing precision and the user satisfaction are improved, and radio resources used by the serving base station for transmitting the sensing signal are reduced.

In the method for obtaining the reference signal information provided by embodiments of the present application, by actively searching the reference signal from the first system, the terminal obtains the reference signal information, and transmits the reference signal information for the first system to the second system network side device accessed by the terminal for the second system to perform sensing measurement, thereby avoiding the defect that the accuracy of the sensing measurement result is low due to the reference signal for the second system network side device accessed by the terminal being weak when arriving at the terminal, effectively improving the accuracy of the sensing measurement result, and reducing radio resources used, by the second system network side device accessed by the terminal, for transmitting the sensing signal.

In an embodiment, the reference signal information includes one or more of the following:
standard information of a first system;
bandwidth information of a first system;
frequency band information of a first system;
a network identification number of a first system;
quality information of a reference signal from a first system; or
periodic information of a reference signal from a first system.

In an embodiment, parameters of the reference signal, i.e., the reference signal information, may include at least one of the following (a1)-(a6).

(a1) The standard information of the first system, which may include the standard information of one or more first systems.

(a2) The bandwidth information of the first system, which may include the bandwidth information of one or more first systems.

(a3) The frequency band information of the first system, which may include the frequency band information of one or more first systems; or, may include the bandwidth information and the corresponding frequency band information of one or more first systems.

(a4) The network identification number of the first system, such as: a PLMN of the communication system, or a SSID of the WI-FI.

(a5) The quality information of the reference signal from the first system, such as: an RSSI, or an RSRP.

(a6) The period information of the reference signal from the first system. In an embodiment, it may include a period value of the reference signal measurement.

In an embodiment, reporting the quality information of the reference signal may be reporting an absolute value or a relative value, such as a relative value relative to a threshold value or a preset reference value indicated by the base station.

In an embodiment, the terminal searches the reference signal from the first system and reports the reference signal information of a candidate first system to the base station. The search procedure of the terminal is performed by the terminal autonomously. The following two modes may be adopted.

Mode 1: the terminal does not store access information of the first system (such as a channel position of a synchronization signal, or a time information).

The terminal first searches for the synchronization signal, reads broadcast information, obtains one or more pieces of available reference signal information (such as a signal transmission period, a frequency domain density, or a bandwidth), and measures the reference signal.

Mode 2: the terminal stores access information of the first system (such as the channel position of the synchronization signal, the time information, or a receiving position of the broadcast signal).

The terminal directly searches a broadcast control channel and receives scheduling information, receives and reads the broadcast information based on the scheduling information, obtains one or more pieces of available reference signal information (such as the signal transmission period, the frequency domain density, or the bandwidth), and measures the reference signal.

Examples for a reporting command are as follows.

(b1) The standard information of the first system: NR.

In an embodiment, a version number of the standard may also be reported, such as NR rel-17, NR rel-18.

(b2) The bandwidth information and frequency band information of the first system: such as system bandwidth being 400 MHz; frequency band being band n261.

(b3) The network identification number of the first system: such as PLMN ID=46004.

(b4) The quality information of the reference signal from the first system: a measurement value of a reception indication signal of a measurement signal: such as RSSI=-73 dBm.

(b5) The period information of the reference signal from the first system: such as 40 ms.

In the embodiment of the present application, the bandwidth information of the first system reported by the terminal may refer to a channel bandwidth of the system during communication, or a signal bandwidth that may be used for the sensing measurement. Different reporting may be performed according to needs.

In an embodiment, reporting the quality information of the reference signal from the first system may be reporting an absolute value (as shown in Table 2 below) or a relative value (such as: reporting threshold information relative to the reference signal information indicated by the base station) (as shown in Table 3 below).

**Table 2: RSSI measurement reporting mapping**

| Reporting value | Measurement precision | Unit |
|---|---|---|
| RSSI_00 | RSSI < -100 | dBm |
| RSSI_01 | -100 ≤ RSSI < -99 | dBm |
| RSSI_02 | -99 ≤ RSSI < -98 | dBm |
| ... | ... | ... |
| RSSI_74 | -27 ≤ RSSI < -26 | dBm |
| RSSI_75 | -26 ≤ RSSI < -25 | dBm |
| RSSI_76 | -25 ≤ RSSI | dBm |

As shown in Table 2, the terminal maps/quantizes the reported value based on the RSSI value of the measured sensing signal and the quantization relationship in Table 2.

**Table 3: RSSI measurement report mapping**

| Reporting value | Measurement precision | Unit |
|---|---|---|
| RSSI_00 | RSSI=threshold 1 | dBm |
| RSSI_01 | threshold 1≤ RSSI < threshold 1+1 | dBm |
| RSSI_02 | threshold 1+1≤ RSSI < threshold 1+2 | dBm |
| ... | ... | ... |
| RSSI_n | threshold 1+n-1≤ RSSI < threshold 1+n | dBm |
| RSSI_n_1 | threshold 1+n ≤ RSSI | dBm |

In an embodiment, the value of threshold 1 is a threshold value indicated by the second system network side device. It may also be agreed by the protocol or obtained through other signaling configurations.

In an embodiment, an increment of adjacent reported values in Table 3 is 1 dB, which is only used as an example. The increment of adjacent reported values may not be limited to this value. For example: it may be 1.5 dB, 2 dB, or 3 dB. In order to reflect flexibility, the increment may be different.

As shown in Table 3, the terminal maps or quantizes the reported value based on the RSSI value of the measured sensing signal and the quantization relationship in the above Table 3.

In an embodiment, the terminal searches the reference signal from the first system and reports the reference signal information of the candidate first system to the second system network side device. The search procedure of the terminal is performed by the terminal autonomously.

Examples for a reporting command are as follows.

(c1) The standard information of the first system: WI-FI.

In an embodiment, the version number of the standard may also be reported, such as 802.11b, 802.11f.

(c2) The bandwidth information and frequency band information of the first system: such as system bandwidth being 160 MHz; frequency band being 6 GHz.

(c3) The network identification number of the first system: such as SSID=chinanet.

(c4) The quality information of the reference signal from the first system: the measurement value of the reception indication signal of the measurement signal: such as RSSI=-73 dBm.

(c5) The period information of the reference signal from the first system: such as 200 ms.

In the embodiment of the present application, the bandwidth information of the first system reported by the terminal may refer to a channel bandwidth of the system during communication, or a signal bandwidth that may be used for the sensing measurement. Different reporting or definition may be performed according to needs.

In an embodiment, reporting the quality information of the reference signal from the first system may be reporting an absolute value (as shown in Table 2 above) or a relative value (such as: reporting threshold information relative to the reference signal information indicated by the base station) (as shown in Table 3 above).

In an embodiment, for a WI-FI system, the terminal may receive a signal from the WI-FI in the following cases.

Class A information: only beacon signals are able to be received. Since beacon signals are unencrypted signals broadcast by the WI-FI, all terminals may receive them, regardless of whether they are legitimate or illegitimate users of access points of the WI-FI.

Class B information: other signals transmitted from WI-FI. For legitimate users of the WI-FI (such as users who know a WI-FI password and may communicate with the WI-FI), in addition to reading beacon signals, data communication related information or other control information may be further read. Compared with class A information, class B information may provide more reference signals of the candidate first system.

Class C information: in an evolved version of the WI-FI, the sensing functions and transmission of sensing signals may be supported. The terminal may receive a sensing signal transmitted from the WI-FI and perform the sensing measurement, that is, the terminal may use the sensing measurement signal (that is, the reference signal) of the WI-FI to sense and measure the sensing service.

In order to conveniently perform a sensing task issued by the second system network side device, the terminal may report one or more of the above-mentioned class A information, class B information or class C information, so that the second system network side device may make a decision on determining the reference signal.

In an embodiment, the first system includes one or more of the following:
a WI-FI system, a Bluetooth system, or a communication system of an operator different from the second system.

In an embodiment, the first system may be understood as a system different from the system where the terminal camps, such as the terminal camps in an NR-1 system of an operator A, and the first system may be an NR-2 system, LTE system, WI-FI system, etc., of an operator B.

In an embodiment, the method further includes:
receiving sensing measurement capability information transmitted from the terminal, where the sensing measurement capability information includes sensing measurement capability of the terminal for the first system.

In an embodiment, the terminal may pre-report the capability to the second system network side device, that is, the sensing measurement capability information of the terminal is transmitted to the second system network side device, such as the sensing measurement capability of the terminal for the first system is reported.

In an embodiment, the terminal reports the sensing measurement capability information, which may include the measurement capability of one first system, or the combination of the measurement capabilities of multiple first systems, or the combination of the measurement capabilities of the current system and multiple first systems.

In an embodiment, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

In an embodiment, the terminal reports the sensing measurement capability information, which may include at least one of the following.

(Capability item 1): a category of the first system for the terminal supporting the sensing measurement, such as the standard information. For example, it may include but is not limited to: WI-FI, Bluetooth, NR, LTE, or PC5 port for D2D.

(Capability item 2): a radio capability of the first system for the terminal supporting the sensing measurement, such as a bandwidth and/or a frequency band supported for receiving signals.

For example, it may include frequency band information: 2.1 GHz or 2.6 GHz or 4.9 GHz, an unlicensed frequency band, or a licensed frequency band.

For example, it may include bandwidth information: channel bandwidth is: 5 MHz, 20 MHz, 40 MHz, 80 MHz, 100 MHz, 400 MHz, or 1 GHz.

(Capability item 3): the reference signal information for the terminal supporting the sensing measurement, that is, the sensing measurement result of the supported first system, which includes one or more of the following.

A sampled value of the reference signal, which may feedback the sampled value of the reference signal obtained by the measurement.

An intermediate value of the reference signal, which may include but is not limited to: measuring a departure angle or an arrival angle, a delay, or a Doppler frequency shift.

A sensing result of the reference signal, which may include but is not limited to a distance to a sensed target, a position, a speed (its scalar value), a speed (its vector value, 2D, or 3D vector), or an angle (vector value, 2D vector, or 3D vector) of the sensed target.

In an embodiment, the sensing capability reporting procedure is used for the gNB of the second system to obtain the sensing measurement capability of the UE. The sensing measurement capability includes the sensing measurement capability of the terminal for the first system. The terminal may report the sensing measurement capability information including at least one of the following.

(Capability item 1): a category of the first system for the terminal supporting the sensing measurement, such as the standard of the first system: NR.

(Capability item 2): a radio capability of the first system for the terminal supporting the sensing measurement, such as a bandwidth and/or a frequency band supported for receiving signals.

For example, it may include frequency band information: n261 (27.5 GHz - 28.35 GHz), or n257 (26.5 GHz - 29.5 GHz).

For example, it may include bandwidth information: channel bandwidth is 100 MHz, or 400 MHz.

(Capability item 3): the reference signal information for the terminal supporting the sensing measurement, that is, the sensing measurement result of the supported first system, which includes at least one of the following.

An intermediate value of the reference signal: a Doppler frequency shift.

In an embodiment, the sensing capability reporting procedure is used for the gNB of the second system to obtain the sensing measurement capability of the UE. The sensing measurement capability includes the sensing measurement capability of the terminal for the first system. The terminal may report the sensing measurement capability information including at least one of the following.

(Capability item 1): a category of the first system for the terminal supporting the sensing measurement, such as the standard of the first system: WI-FI.

(Capability item 2): a radio capability of the first system for the terminal supporting the sensing measurement, such as a bandwidth and/or a frequency band supported for receiving signals.

For example, it may include frequency band information: 6 GHz, or 2.4 GHz.

For example, it may include bandwidth information: channel bandwidth is 80 MHz, 160 MHz.

(Capability item 3): the reference signal information for the terminal supporting the sensing measurement, that is, the sensing measurement result of the supported first system, which includes at least one of the following.

An intermediate value of the measurement signal: a Doppler frequency shift, or a multipath delay.

In an embodiment, in order to conveniently subsequently measure the first system, the terminal may also report the following content:

Reporting supplementary information 1: whether a measurement gap for search is required. This information is used to indicate whether the base station of the second system needs to search a measurement gap when a search measurement task is performed. If the measurement gap for search is required, during performing the search, the base station of the second system cannot exchange data or information with the terminal.

Reporting supplementary information 2: a duration for search measurement. This information is used to indicate time required by the base station of the second system for performing the search measurement task, which may be several candidate values such as 80 ms, 160 ms, 1024 ms, etc. For example, when the terminal stores access information of the first system, the time required for performing the search measurement task is shorter, otherwise, the time required is longer.

In an embodiment, the method further includes:
transmitting search request information, where the search request information is used to indicate the terminal to search a reference signal transmitted from a first system.

In an embodiment, after receiving the sensing measurement capability information reported by the terminal, the second system network side device may transmit the search request information to the terminal based on the sensing measurement capability information reported from the terminal, to indicate the terminal to search the reference signal transmitted from the first system.

In an embodiment, the second system network side device may transmit the search request information to the terminal based on the known sensing measurement capability information of the terminal, to indicate the terminal to search the reference signal transmitted from the first system.

In an embodiment, the second system network side device may transmit the search request information to the terminal based on the known prior information of the terminal (such as the first system that can be searched by the terminal presents in the surrounding), to indicate the terminal to search the reference signal transmitted from the first system.

In an embodiment, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

In an embodiment, the search request information transmitted from the second system network side device to the terminal may include at least one of the following.

(d1) The standard information of the first system indicating search for the terminal, which may include one or more standard information of the first system.

(d2) The bandwidth information and/or the frequency band information of the first system indicating search for the terminal, which may include one or more bandwidth values of the first system, or a minimum bandwidth value of system, or a frequency band of the system.

(d3) The expected reporting time of the reference signal information, which indicates the expected time or the latest time for the terminal to report the reference signal information.

(d4) The reporting threshold information of the reference signal information, which indicates the threshold information for the terminal to report the reference signal information, such as indicating an RSSI threshold or an RSRP threshold. The terminal only feeds back the reference signal from the first system that is greater than the RSSI threshold or the RSRP threshold.

(d5) The period threshold of the reference signal used for the sensing measurement, which indicates a maximum period threshold for the terminal to report the reference signal information, such as the period threshold of the reference signal T=100 ms. The terminal only feeds back the reference signal from the first system that is less than the period threshold.

In an embodiment, the second system network side device may transmit a search request information to the terminal based on the sensing measurement capability information reported from the terminal, to indicate the terminal to search an NR base station of another operator. The search request information includes one or more of the following information.

(e1) The standard information of the first system indicating search for the terminal: NR.

(e2) The bandwidth information and/or the frequency band information of the first system indicating search for the terminal: 100 MHz, or frequency n261 (27.5 GHz-28.35 GHz).

(e3) The expected reporting time of the reference signal information, which indicates the expected time or the latest time for the terminal to report the reference signal information: the candidate values may be {80 ms, 200 ms, 500 ms, 1000 ms, 2000 ms}.

(e4) The reporting threshold information of the reference signal information, which indicates that the threshold RSSI=-75 dBm, and the terminal only feeds back the reference signal from the first system that is greater than the threshold.

(e5) The period threshold of the reference signal used for the sensing measurement, which indicates that the maximum period threshold T=40 ms, and the terminal only feeds back the reference signal from the first system that is less than the period threshold.

In an embodiment, the reporting threshold information may be indicated using an absolute value or a relative value. For example, relative to a certain reference signal for the current resident cell, it is greater than a threshold value (such as: greater than 3 dB, or 6 dB). The certain reference signal may be an SSB, a PRS, or a CSI-RS signal.

In an embodiment, the second system network side device may transmit a search request information to the terminal based on the sensing measurement capability information reported from the terminal, to indicate the terminal to search a WI-FI signal. The search request information includes one or more of the following information.

(f1) The standard information of the first system indicating search for the terminal: WI-FI.

(f2) The bandwidth information and/or the frequency band information of the first system indicating search for the terminal: 160 MHz, or frequency being 6 GHz.

(f3) The expected reporting time of the reference signal information, which indicates the expected time or the latest time for the terminal to report the reference signal information: the candidate values are {80 ms, 200 ms, 500 ms, 1000 ms, 2000 ms}.

(f4) The reporting threshold information of the reference signal information, which indicates that the threshold RSSI=-75 dBm, and the terminal only feeds back the reference signal from the first system that is greater than the threshold.

(f5) The period threshold of the reference signal used for the sensing measurement, which indicates that the maximum period threshold T=200 ms, and the terminal only feeds back the reference signal from the first system that is less than the period threshold.

In an embodiment, the reporting threshold information may be indicated using an absolute value or a relative value. For example, relative to a certain reference signal for the current resident cell, it is greater than a threshold value (such as: greater than 3 dB, or 6 dB). The certain reference signal may be an SSB, a PRS, or a CSI-RS signal, which is configured or indicated by the base station, or agreed by the protocol.

In an embodiment, in some application scenarios (such as supermarkets, airports), the WI-FI system is deployed by the operator A. The network side device may indicate search auxiliary information or search signal high priority selection information, so that the UE may quickly perform search and signal source selection. For example, the base station provides frequency band information or SSID information to the terminal.

In an embodiment, the search request information is carried in one or more of the following:
high layer signaling, physical layer signaling, or application layer data.

In an embodiment, the base station triggers the terminal to search the reference signal from the first system through the search request information, which may be triggered by the high layer signaling (such as RRC signaling, OR MAC-CE), or may be triggered by the physical layer signaling, or may be triggered by the application layer data, which is not limited in the embodiments of the present application.

In an embodiment, the method further includes:
transmitting auxiliary information to the terminal, where the auxiliary information is used to assist the terminal in discovering a to-be-searched first system.

In an embodiment, the second system network side device may also issue auxiliary data to help the terminal quickly discover the first system, such as: indicating the frequency of the first system, an access bandwidth, or a network service number (PLMN, or SSID), etc.

In an embodiment, in some application scenarios (such as supermarkets, airports), the WI-FI system is deployed by the operator A. The network side device may indicate search auxiliary information or search signal high priority selection information, so that the UE may quickly perform search and signal source selection. For example, the base station provides frequency band information or SSID information to the terminal.

In an embodiment, the method further includes:
transmitting sensing measurement configuration information to the terminal.

In an embodiment, after the terminal transmits the reference signal information to the second system network side device, the second system network side device may indicate the UE to receive the reference signal transmitted from the first system and perform the measurement task when transmitting the sensing measurement configuration information.

In the embodiment of the present application, a problem of poor quality of a sensing signal transmitted from a serving base station is solved, the sensing precision and the user satisfaction are improved, and radio resources used by the serving base station for transmit the sensing signal are reduced.

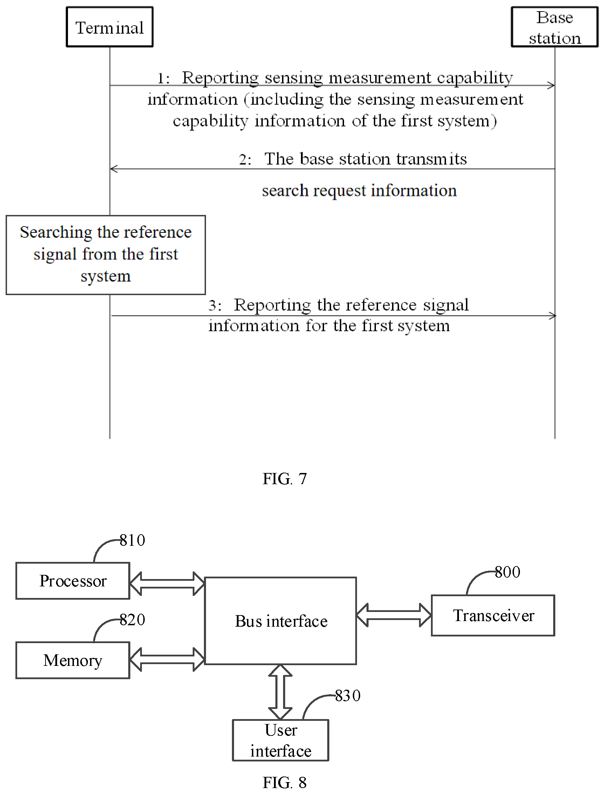

In an embodiment, FIG. 7 is a third schematic flowchart of a method for obtaining reference signal information according to an embodiment of the present application. As shown in FIG. 7, the method includes the following steps.

Step 1: the terminal reports the sensing measurement capability information to the base station of the second system, which includes the sensing measurement capability information for the first system.

The terminal reports the sensing measurement capability information, which may include at least one of the following.

(Capability item 1): a category of the first system for the terminal supporting the sensing measurement, such as the standard information. For example, it may include but is not limited to: WI-FI, Bluetooth, NR, LTE, or PC5 port for D2D.

(Capability item 2): a radio capability of the first system for the terminal supporting the sensing measurement, such as a bandwidth and/or a frequency band supported for receiving signals.

For example, it may include frequency band information: 2.1 GHz or 2.6 GHz or 4.9 GHz, an unlicensed frequency band, or a licensed frequency band.

For example, it may include bandwidth information: channel bandwidth is: 5 MHz, 20 MHz, 40 MHz, 80 MHz, 100 MHz, 400 MHz, or 1 GHz.

(Capability item 3): the reference signal information for the terminal supporting the sensing measurement, that is, the sensing measurement result of the supported first system, which includes one or more of the following.

A sampled value of the reference signal, which may feedback the sampled value of the reference signal obtained by the measurement.

An intermediate value of the reference signal, which may include but is not limited to: measuring a departure angle or an arrival angle, a delay, or a Doppler frequency shift.

A sensing result of the reference signal, which may include but is not limited to a distance to a sensed target, a position, a speed (its scalar value), a speed (its vector value, 2D, or 3D vector), or an angle (vector value, 2D vector, or 3D vector) of the sensed target.

In an embodiment, the terminal reports the sensing measurement capability information, which may include the measurement capability of one first system, or the combination of the measurement capabilities of multiple first systems, or the combination of the measurement capabilities of the current system and multiple first systems.

The first system may be understood as a system different from the system where the terminal camps. For example, if the terminal camps in the NR-1 system of the operator A, the first system may be the NR-2 system, the LTE system, the WI-FI system, etc., of the operator B.

Step 2: the base station transmits a search request information.

After receiving the sensing measurement capability information reported by the terminal, the second system network side device may transmit the search request information to the terminal based on the sensing measurement capability information reported from the terminal, to indicate the terminal to search the reference signal transmitted from the first system. In an embodiment, the search request information transmitted from the second system network side device to the terminal may include at least one of the following.

(d1) The standard information of the first system indicating search for the terminal, which may include one or more standard information of the first system.

(d2) The bandwidth information and/or the frequency band information of the first system indicating search for the terminal, which may include one or more bandwidth values of the first system, or a minimum bandwidth value of system, or a frequency band of the system.

(d3) The expected reporting time of the reference signal information, which indicates the expected time or the latest time for the terminal to report the reference signal information.

(d4) The reporting threshold information of the reference signal information, which indicates the threshold information for the terminal to report the reference signal information, such as indicating an RSSI threshold or an RSRP threshold. The terminal only feeds back the reference signal from the first system that is greater than the RSSI threshold or the RSRP threshold.

(d5) The period threshold of the reference signal used for the sensing measurement, which indicates a maximum period threshold for the terminal to report the reference signal information, such as the period threshold of the reference signal T=100 ms. The terminal only feeds back the reference signal from the first system that is less than the period threshold.

In an embodiment, in the base station indication signaling, if one or more pieces of information is not included in the search request information, the terminal may search the reference signal from the first system based on the default search information. The default search information may be determined by the protocol or determined based on the quality requirements of the service.

In an embodiment, in addition to the base station of the second system indicating the terminal to search the reference signal from the first system, the terminal may also search the reference signal from the first system by itself. The triggering condition may be: the signal quality of the second system network side device received by the terminal is lower than the first threshold, and/or the signal quality of the source sensing signal of the second system network side device received by the terminal is lower than the second threshold.

In an embodiment, the base station triggers the terminal to search the reference signal from the first system through the search request information, which may be triggered by the high layer signaling (such as RRC signaling, OR MAC-CE), or may be triggered by the physical layer signaling, or may be triggered by the application layer data, which is not limited in the embodiments of the present application.

In an embodiment, the second system network side device may also issue auxiliary data to help the terminal quickly discover the first system, such as: indicating the frequency of the first system, an access bandwidth, or a network service number (PLMN, or SSID), etc.

Step 3: the reference signal information of the first system is reported.

The terminal searches the reference signal from the first system and reports the reference signal information of the candidate first system to the base station. The reference signal information may include at least one of the following (a1) - (a6).

(a1) The standard information of the first system, which may include the standard information of one or more first systems.

(a2) The bandwidth information of the first system, which may include the bandwidth information of one or more first systems.

(a3) The frequency band information of the first system, which may include the frequency band information of one or more first systems; or, may include the bandwidth information and the corresponding frequency band information of one or more first systems.

(a4) The network identification number of the first system, such as: a PLMN of the communication system, or a SSID of the WI-FI.

(a5) The quality information of the reference signal from the first system, such as: an RSSI, or an RSRP.

(a6) The period information of the reference signal from the first system. In an embodiment, it may include a period value of the reference signal measurement.

In an embodiment, reporting the quality information of the reference signal may be reporting an absolute value or a relative value, such as a relative value relative to a threshold value or a preset reference value indicated by the base station.

After the terminal transmits the reference signal information to the second system network side device, the second system network side device may indicate the UE to receive the reference signal transmitted from the first system and perform the measurement task when transmitting the sensing measurement configuration information.

Further, after obtaining the sensing measurement parameter, the UE reports the sensing measurement parameter to the second system network side device or a sensing server.

In the embodiment of the present application, a problem of poor quality of a sensing signal transmitted from a serving base station is solved, the sensing precision and the user satisfaction are improved, and radio resources used by the serving base station for transmit the sensing signal are reduced.

In an embodiment, the application scenario is: the terminal user performing the sensing measurement is indoors, the terminal belongs to the operator A, and the service base station of the operator A is outdoors. An NR base station gNB-b of the operator B is deployed indoors, which operates in the 28 GHz frequency band, and has a system bandwidth of 400 MHz. The terminal may search the reference signal transmitted from the NR base station gNB-b of the operator B. The reference signal transmitted from the gNB-b is used for sensing measurement, to improve the sensing measurement precision, reduce the number of sensing signals transmitted from the operator A, and improve the utilization rate of air interface resources. The following steps may be specifically included.

Step 1: the terminal reports the sensing measurement capability information to the base station, which includes the sensing measurement capability information of the first system.

The sensing capability reporting procedure is used for the gNB of the second system to obtain the sensing measurement capability of the UE. The sensing measurement capability includes the sensing measurement capability of the terminal for the first system. The terminal may report the sensing measurement capability information including at least one of the following.

(Capability item 1): a category of the first system for the terminal supporting the sensing measurement, such as the standard of the first system: NR.

(Capability item 2): a radio capability of the first system for the terminal supporting the sensing measurement, such as a bandwidth and/or a frequency band supported for receiving signals.

For example, it may include frequency band information: n261 (27.5 GHz - 28.35 GHz), or n257 (26.5 GHz - 29.5 GHz).

For example, it may include bandwidth information: channel bandwidth is 100 MHz, or 400 MHz.

(Capability item 3): the reference signal information for the terminal supporting the sensing measurement, that is, the sensing measurement result of the supported first system, which includes at least one of the following.

An intermediate value of the reference signal: a Doppler frequency shift.

Reporting supplementary information 1: whether a measurement gap for search is required. This information is used to indicate whether the base station of the second system needs to search a measurement gap when a search measurement task is performed. If the search for the measurement gap is required, during performing the search, the base station of the second system cannot exchange data or information with the terminal.

Reporting supplementary information 2: a duration for search measurement. This information is used to indicate time required by the base station of the second system for performing the search measurement task, which may be several candidate values such as 80 ms, 160 ms, 1024 ms, etc. For example, when the terminal stores access information of the first system, the time required for performing the search measurement task is shorter, otherwise, the time required is longer.

Step 2: the base station transmits search request information.

The second system network side device may transmit search request information to the terminal based on the sensing measurement capability information reported from the terminal, to indicate the terminal to search an NR base station of another operator. The search request information includes one or more of the following information.

(e1) The standard information of the first system indicating search for the terminal: NR.

(e2) The bandwidth information and/or the frequency band information of the first system indicating search for the terminal: 100 MHz, or frequency n261 (27.5 GHz - 28.35 GHz).

(e3) The expected reporting time of the reference signal information, which indicates the expected time or the latest time for the terminal to report the reference signal information: the candidate values may be {80 ms, 200 ms, 500 ms, 1000 ms, 2000 ms}.

(e4) The reporting threshold information of the reference signal information, which indicates that the threshold RSSI=-75 dBm, and the terminal only feeds back the reference signal from the first system that is greater than the threshold.

(e5) The period threshold of the reference signal used for the sensing measurement, which indicates that the maximum period threshold T=40 ms, and the terminal only feeds back the reference signal from the first system that is less than the period threshold.

In an embodiment, the reporting threshold information may be indicated using an absolute value or a relative value. For example, relative to a certain reference signal for the current resident cell, it is greater than a threshold value (such as: greater than 3 dB, or 6 dB). The certain reference signal may be an SSB, a PRS, or a CSI-RS signal.

Step 3: the reference signal information of the first system is reported.

The terminal searches the reference signal from the first system and reports the reference signal information of the candidate first system to the base station. When the terminal performing the search process, it is performed by the terminal autonomously. The following two modes may be adopted.

Mode 1: the terminal does not store access information of the first system (such as a channel position of a synchronization signal, or a time information).

The terminal first searches for the synchronization signal, reads broadcast information, obtains one or more pieces of available reference signal information (such as a signal transmission period, a frequency domain density, or a bandwidth), and measures the reference signal.

Mode 2: the terminal stores access information of the first system (such as the channel position of the synchronization signal, the time information, or a receiving position of the broadcast signal).

The terminal directly searches a broadcast control channel and receives scheduling information, receives and reads the broadcast information based on the scheduling information, obtains one or more pieces of available reference signal information (such as the signal transmission period, the frequency domain density, or the bandwidth), and measures the reference signal.

Examples for a reporting command are as follows.

(b1) The standard information of the first system: NR.

In an embodiment, a version number of the standard may also be reported, such as NR rel-17, NR rel-18.

(b2) The bandwidth information and frequency band information of the first system: such as system bandwidth being 400 MHz; frequency band being band n261.

(b3) The network identification number of the first system: such as PLMN ID=46004.

(b4) The quality information of the reference signal from the first system: a measurement value of a reception indication signal of a measurement signal: such as RSSI=-73 dBm.

(b5) The period information of the reference signal from the first system: such as 40 ms.

In the embodiment of the present application, the bandwidth information of the first system reported by the terminal may refer to a channel bandwidth of the system during communication, or a signal bandwidth that may be used for the sensing measurement. Different reporting may be performed according to needs.

In an embodiment, reporting the quality information of the reference signal from the first system may be reporting an absolute value (as shown in Table 2 below) or a relative value (such as: reporting threshold information relative to the reference signal information indicated by the base station) (as shown in Table 3 below).

**Table 2: RSSI measurement reporting mapping**

| Reporting value | Measurement precision | Unit |
|---|---|---|
| RSSI_00 | RSSI < -100 | dBm |
| RSSI_01 | -100 ≤ RSSI < -99 | dBm |
| RSSI_02 | -99 ≤ RSSI < -98 | dBm |
| ... | ... | ... |
| RSSI_74 | -27 ≤ RSSI < -26 | dBm |
| RSSI_75 | -26 ≤ RSSI < -25 | dBm |
| RSSI_76 | -25 ≤ RSSI | dBm |

As shown in Table 2, the terminal maps/quantizes the reported value based on the RSSI value of the measured sensing signal and the quantization relationship in Table 2.

**Table 3: RSSI measurement report mapping**

| Reporting value | Measurement precision | Unit |
|---|---|---|
| RSSI_00 | RSSI=threshold 1 | dBm |
| RSSI_01 | threshold 1≤ RSSI < threshold 1+1 | dBm |
| RSSI_02 | threshold 1+1≤ RSSI < threshold 1+2 | dBm |
| ... | ... | ... |
| RSSI_n | threshold 1+n-1≤ RSSI < threshold 1+n | dBm |
| RSSI_n_1 | threshold 1+n ≤ RSSI | dBm |

In an embodiment, the value of threshold 1 is a threshold value indicated by the second system network side device. It may also be agreed by the protocol or obtained through other signaling configurations.

In an embodiment, an increment of adjacent reported values in Table 3 is 1 dB, which is only used as an example. The increment of adjacent reported values may not be limited to this value. For example: it may be 1.5 dB, 2 dB, or 3 dB. In order to reflect flexibility, the increment may be different.

As shown in Table 3, the terminal maps or quantizes the reported value based on the RSSI value of the measured sensing signal and the quantization relationship in the above Table 3.

After the terminal transmits the reference signal information to the second system network side device, the second system network side device may indicate the UE to receive the reference signal transmitted from the first system and perform the measurement task when transmitting the sensing measurement configuration information.

Further, after obtaining the sensing measurement parameter, the UE reports the sensing measurement parameter to the second system network side device or a sensing server.

In the embodiment of the present application, a problem of poor quality of a sensing signal transmitted from a serving base station is solved, the sensing precision and the user satisfaction are improved, and radio resources used by the serving base station for transmit the sensing signal are reduced.

In an embodiment, the application scenario is: the terminal user performing the sensing measurement is indoors, the terminal belongs to the operator A, and the service base station of the operator A is outdoors. A WI-FI device (or a WI-FI hotspot) is deployed indoors, which operates in the 5.8 GHz frequency band, and has a system bandwidth of 160 MHz. Through the solutions provided by this embodiment, the terminal may search the signal transmitted from the WI-FI (such as: the beacon signal), and then use the WI-FI signal for the sensing measurement, to improve the sensing measurement precision, reduce the number of sensing signals transmitted from the operator A, and improve the utilization rate of air interface resources. The following steps may be specifically included.

Step 1: the terminal reports the sensing measurement capability information to the base station, which includes the sensing measurement capability information of the first system.

The sensing capability reporting procedure is used for the gNB of the second system to obtain the sensing measurement capability of the UE. The sensing measurement capability includes the sensing measurement capability of the terminal for the first system. The terminal may report the sensing measurement capability information including at least one of the following.

(Capability item 1): a category of the first system for the terminal supporting the sensing measurement, such as the standard of the first system: NR.

(Capability item 2): a radio capability of the first system for the terminal supporting the sensing measurement, such as a bandwidth and/or a frequency band supported for receiving signals.

For example, it may include frequency band information: 6.4 GHz, or 2.4 GHz.

For example, it may include bandwidth information: channel bandwidth is 80 MHz, or 160 MHz.

(Capability item 3): the reference signal information for the terminal supporting the sensing measurement, that is, the sensing measurement result of the supported first system, which includes at least one of the following.

An intermediate value of the reference signal: a Doppler frequency shift, or a multipath delay.

In an embodiment, in order to conveniently subsequently measure the first system, the terminal may also report the following content:

Reporting supplementary information 1: whether a measurement gap for search is required. This information is used to indicate whether the base station of the second system needs to search a measurement gap when a search measurement task is performed. If the search for the measurement gap is required, during performing the search, the base station of the second system cannot exchange data or information with the terminal.

Reporting supplementary information 2: a duration for search measurement. This information is used to indicate time required by the base station of the second system for performing the search measurement task, which may be several candidate values such as 80 ms, 160 ms, 1024 ms, etc. For example, when the terminal stores access information of the first system, the time required for performing the search measurement task is shorter, otherwise, the time required is longer.

Step 2: The base station transmits search request information.

In an embodiment, the second system network side device may transmit search request information to the terminal based on the sensing measurement capability information reported from the terminal, to indicate the terminal to search a WI-FI signal. The search request information includes one or more of the following information.

(f1) The standard information of the first system indicating search for the terminal: WI-FI.

(f2) The bandwidth information and/or the frequency band information of the first system indicating search for the terminal: 160 MHz, or frequency being 6 GHz.

(f3) The expected reporting time of the reference signal information, which indicates the expected time or the latest time for the terminal to report the reference signal information: the candidate values are {80 ms, 200 ms, 500 ms, 1000 ms, 2000 ms}.

(f4) The reporting threshold information of the reference signal information, which indicates that the threshold RSSI=-75 dBm, and the terminal only feeds back the reference signal from the first system that is greater than the threshold.

(f5) The period threshold of the reference signal used for the sensing measurement, which indicates that the maximum period threshold T=200 ms, and the terminal only feeds back the reference signal from the first system that is less than the period threshold.

In an embodiment, the reporting threshold information may be indicated using an absolute value or a relative value. For example, relative to a reference signal for the current resident cell, it is greater than a threshold value (such as greater than 3dB or 6dB). A reference signal may be an SSB, a PRS, or a CSI-RS signal, configured or indicated by the base station, or agreed by the protocol.

In an embodiment, in some application scenarios (such as supermarkets, airports), the WI-FI system is deployed by the operator A. The network side device may indicate search auxiliary information or search signal high priority selection information, so that the UE may quickly perform search and signal source selection. For example, the base station provides frequency band information or SSID information to the terminal.

Step 3: the reference signal information of the first system is reported.

The terminal searches the reference signal from the first system and reports the reference signal information of the candidate first system to the second system network side device. The search procedure of the terminal is performed by the terminal autonomously.

Examples for a reporting command are as follows.

(c1) The standard information of the first system: WI-FI.

In an embodiment, the version number of the standard may also be reported, such as 802.11b, 802.11f.

(c2) The bandwidth information and frequency band information of the first system: such as system bandwidth being 160 MHz; frequency band being 6 GHz.

(c3) The network identification number of the first system: such as SSID=chinanet.

(c4) The quality information of the reference signal from the first system: the measurement value of the reception indication signal of the measurement signal: such as RSSI=-73 dBm.

(c5) The period information of the reference signal from the first system: such as 200 ms.

In the embodiment of the present application, the bandwidth information of the first system reported by the terminal may refer to a channel bandwidth of the system during communication, or a signal bandwidth that may be used for the sensing measurement. Different reporting or definition may be performed according to needs.

In an embodiment, reporting the quality information of the reference signal from the first system may be reporting an absolute value (as shown in Table 2 above) or a relative value (such as: reporting threshold information relative to the reference signal information indicated by the base station) (as shown in Table 3 above).

In an embodiment, for a WI-FI system, the terminal may receive a signal from the WI-FI in the following cases.

Class A information: only beacon signals are able to be received. Since beacon signals are unencrypted signals broadcast by the WI-FI, all terminals may receive them, regardless of whether they are legitimate or illegitimate users of access points of the WI-FI.

Class B information: other signals transmitted from WI-FI. For legitimate users of the WI-FI (such as users who know a WI-FI password and may communicate with the WI-FI), in addition to reading beacon signals, data communication related information or other control information may be further read. Compared with class A information, class B information may provide more reference signals of the candidate first system.

Class C information: in an evolved version of the WI-FI, the sensing functions and transmission of sensing signals may be supported. The terminal may receive a sensing signal transmitted from the WI-FI and perform the sensing measurement, that is, the terminal may use the sensing measurement signal (that is, the reference signal) of the WI-FI to sense and measure the sensing service.

In order to conveniently perform a sensing task issued by the second system network side device, the terminal may report one or more of the above-mentioned class A information, class B information or class C information, so that the second system network side device may make a decision on determining the reference signal.

After the terminal transmits the reference signal information to the second system network side device, the second system network side device may indicate the UE to receive the reference signal transmitted from the first system and perform the measurement task when transmitting the sensing measurement configuration information.

Further, after obtaining the sensing measurement parameter, the UE reports the sensing measurement parameter to the second system network side device or a sensing server.

In the embodiment of the present application, a problem of poor quality of a sensing signal transmitted from a serving base station is solved, the sensing precision and the user satisfaction are improved, and radio resources used by the serving base station for transmit the sensing signal are reduced.

The terminal device in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network side device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network side device may be used for exchanging received air frames with internet protocol (IP) packets, and acting as a router between the wireless terminal device and the rest of the access network, where the rest of the access network may include an IP communication network. The network side device may also coordinate attribute management for the air interface. For example, the network side device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network side device may include a centralized unit (CU) node and a distributed unit (DU) node, and the centralized unit and the distributed unit may be geographically separated.

FIG. 8 is a schematic structural diagram of a terminal according to an embodiment of the present application. As shown in FIG. 8, the terminal includes a memory 820, a transceiver 800 and a processor 810.

The memory 820 is used to store a computer program, the transceiver 800 is used to transmit and receive data under control of the processor 810, and the processor 810 is used to read the computer program in the memory 820 and perform the following operations:
searching a reference signal transmitted from a first system device to obtain reference signal information; and
transmitting the reference signal information to a second system network side device accessed by the terminal,
where the reference signal is used for a sensing measurement for a second system.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, etc., which are well known in the art, and therefore are not further described in the present application. The bus interface provides an interface. The transceiver 800 may include multiple elements, i.e., including a transmitter and a receiver, units for providing communication with various other devices over transmission media including wireless channels, wired channels, fiber optic cables, and the like. For different user equipment, a user interface 830 may also be an interface capable of externally or internally connecting the required equipment, and the connected equipment includes, but not limited to, a small keypad, a display, a speaker, a microphone, a joystick, and the like.

The processor 810 is responsible for managing the bus architecture and general processing, and the memory 820 may store data used by the processor 810 when performing operations.

In an embodiment, the processor 810 may be a central processing unit (CPU), an application specific integrated circuit (ASIC), a field-programmable gate array (FPGA), or a complex programmable logic device (CPLD), the processor may also use a multi-core architecture.

The processor calls a computer program stored in the memory to execute any of the methods provided by the embodiments of the present application according to the executable instructions obtained. The processor and the memory may also be arranged physically separately.

In an embodiment, the reference signal information includes one or more of the following:
standard information of a first system;
bandwidth information of a first system;
frequency band information of a first system;
a network identification number of a first system;
quality information of a reference signal from a first system; or
periodic information of a reference signal from a first system.

In an embodiment, the first system includes one or more of the following:
a WI-FI system, a Bluetooth system, or a communication system of an operator different from the second system.

In an embodiment, the processor 810 is further used for:
transmitting sensing measurement capability information to the second system network side device, where the sensing measurement capability information includes sensing measurement capability of the terminal for a first system.

In an embodiment, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

In an embodiment, the processor 810 is further used for s:
receiving search request information transmitted from the second system network side device, where the search request information is used to indicate the terminal to search a reference signal transmitted from a first system.

In an embodiment, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

In an embodiment, the search request information is carried in one or more of the following:
high layer signaling, physical layer signaling, or application layer data.

In an embodiment, the processor 810 is further used for:
searching a reference signal transmitted from a first system based on default search information.

In an embodiment, the processor 810 is used for:
in case that a trigger condition is satisfied, searching the reference signal transmitted from the first system device to obtain the reference signal information,
where the trigger condition includes one or more of the following:
   a signal quality of the second system network side device received by the terminal is lower than a first threshold; or
   a signal quality of a source sensing signal of the second system network side device received by the terminal is lower than a second threshold.

In an embodiment, the processor 810 is further used for:
receiving auxiliary information transmitted from the second system network side device, where the auxiliary information is used to indicate to discover a to-be-searched first system.

In an embodiment, the processor 810 is further used for:
receiving sensing measurement configuration information transmitted from the second system network side device; and
performing sensing measurement on a reference signal transmitted from a first system based on the sensing measurement configuration information.

It should be noted here that the above terminal provided by the embodiments of the present application may implement all the method steps implemented by the above method embodiments executed by a terminal, and may achieve the same effect. The same parts and beneficial effects as the same method embodiments are not repeated in the present application.

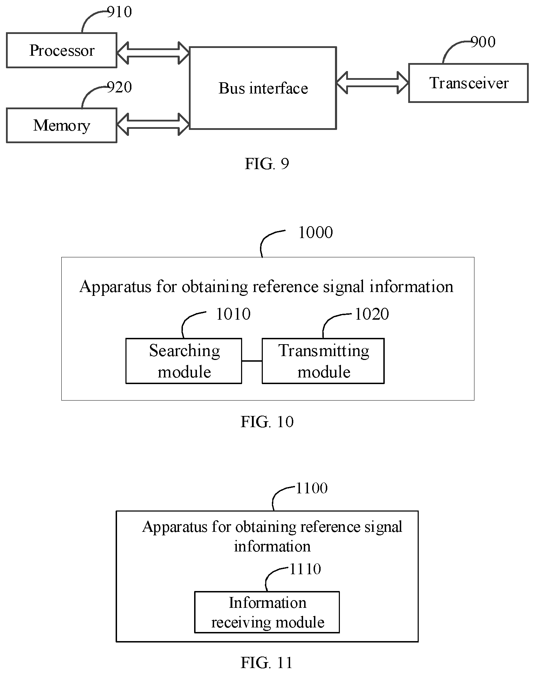

FIG. 9 is a schematic structural diagram of a network side device according to an embodiment of the present application. As shown in FIG. 9, the network side device includes a memory 920, a transceiver 900 and a processor 910.

The memory 920 is used to store a computer program, the transceiver 900 is used to transmit and receive data under control of the processor 910, and the processor 910 is used to read the computer program in the memory 920 and perform the following operations:
receiving reference signal information transmitted from the terminal after searching a reference signal transmitted from a first system device,
where the reference signal is used for a sensing measurement for a second system.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, units for providing communication with various other devices over transmission media including wireless channels, wired channels, fiber optic cables, and the like. The processor 910 is responsible for managing the bus architecture and general processing, and the memory 920 may store data used by the processor 910 when performing operations.

The processor 910 may be a central processing unit (CPU), an application specific integrated circuit (ASIC), a field-programmable gate array (FPGA), or a complex programmable logic device (CPLD), the processor may also use a multi-core architecture.

In an embodiment, the reference signal information includes one or more of the following:
standard information of a first system;
bandwidth information of a first system;
frequency band information of a first system;
a network identification number of a first system;
quality information of a reference signal from a first system; or
periodic information of a reference signal from a first system.

In an embodiment, the first system includes one or more of the following:
a WI-FI system, a Bluetooth system, or a communication system of an operator different from the second system.

In an embodiment, the processor 910 is further used for:
receiving sensing measurement capability information transmitted from the terminal, where the sensing measurement capability information includes sensing measurement capability of the terminal for the first system.

In an embodiment, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

In an embodiment, the processor 910 is further used for:
transmitting search request information, where the search request information is used to indicate the terminal to search a reference signal transmitted from a first system.

In an embodiment, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

In an embodiment, the search request information is carried in one or more of the following:
high layer signaling, physical layer signaling, or application layer data.

In an embodiment, the processor 910 is further used for:
transmitting auxiliary information to the terminal, where the auxiliary information is used to assist the terminal in discovering a to-be-searched first system.

In an embodiment, the processor 910 is further used for:
transmitting sensing measurement configuration information to the terminal.

It should be noted here that the above network side device provided by the embodiments of the present application may implement all the method steps implemented by the above method embodiments executed by a network side device, and may achieve the same effect. The same parts and beneficial effects as the same method embodiments are not repeated in the present application.

FIG. 10 is a first schematic flowchart of an apparatus for obtaining reference signal information according to an embodiment of the present application. As shown in FIG. 10, the apparatus for obtaining the reference signal information 1000 includes:
a searching module 1010, used for searching a reference signal transmitted from a first system device to obtain reference signal information; and
a transmitting module 1020, used for transmitting the reference signal information to a second system network side device accessed by the terminal,
where the reference signal is used for a sensing measurement for a second system.

In the apparatus for obtaining the reference signal information provided by embodiments of the present application, by actively searching the reference signal from the first system, the terminal obtains the reference signal information, and transmits the reference signal information for the first system to the second system network side device accessed by the terminal for the second system to perform sensing measurement, thereby avoiding the defect that the accuracy of the sensing measurement result is low due to the reference signal for the second system network side device accessed by the terminal being weak when arriving at the terminal, effectively improving the accuracy of the sensing measurement result, and reducing radio resources used, by the second system network side device accessed by the terminal, for transmitting the sensing signal.

The apparatus for obtaining the reference signal information provided by the embodiment of the present application may implement the steps of each embodiment corresponding to the aforementioned method for obtaining the reference signal information, and may achieve the same effect. The same parts and beneficial effects as the same method embodiments are not repeated here.

In an embodiment, the reference signal information includes one or more of the following:
standard information of a first system;
bandwidth information of a first system;
frequency band information of a first system;
a network identification number of a first system;
quality information of a reference signal from a first system; or
periodic information of a reference signal from a first system.

In an embodiment, the first system includes one or more of the following:
a WI-FI system, a Bluetooth system, or a communication system of an operator different from the second system.

In an embodiment, the apparatus further includes:
a capability reporting module, used for transmitting sensing measurement capability information to the second system network side device, where the sensing measurement capability information includes sensing measurement capability of the terminal for a first system.

In an embodiment, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

In an embodiment, the apparatus further includes:
a request receiving module, used for receiving search request information transmitted from the second system network side device, where the search request information is used to indicate the terminal to search a reference signal transmitted from a first system.

In an embodiment, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

In an embodiment, the search request information is carried in one or more of the following:
high layer signaling, physical layer signaling, or application layer data.

In an embodiment, the apparatus further includes:
a default search module, used for searching a reference signal transmitted from a first system based on default search information.

In an embodiment, the search module is used for:
in case that a trigger condition is satisfied, searching the reference signal transmitted from the first system device to obtain the reference signal information,
where the trigger condition includes one or more of the following:
   a signal quality of the second system network side device received by the terminal is lower than a first threshold; or
   a signal quality of a source sensing signal of the second system network side device received by the terminal is lower than a second threshold.

In an embodiment, the apparatus further includes:
an auxiliary information receiving module, used for receiving auxiliary information transmitted from the second system network side device, where the auxiliary information is used to indicate to discover a to-be-searched first system.

In an embodiment, the apparatus further includes:
a configuration information receiving module, used for receiving sensing measurement configuration information transmitted from the second system network side device; and
a sensing measurement module, used for performing sensing measurement on a reference signal transmitted from a first system based on the sensing measurement configuration information.

It should be noted that the division of units in the embodiments of the present application is schematic and is only a logical function division. There may be other division methods in actual implementation. In addition, each functional unit in each embodiment of the present application may be integrated into a processing unit, or each unit may exist physically separately, or two or more units may be integrated into one unit. The above-mentioned integrated unit may be implemented in the form of hardware or in the form of a software functional unit.

FIG. 11 is a second schematic flowchart of an apparatus for obtaining reference signal information according to an embodiment of the present application. As shown in FIG. 11, the apparatus for obtaining the reference signal information 1100 includes:
an information receiving module 1110, used for receiving reference signal information transmitted from the terminal after searching a reference signal transmitted from a first system device,
where the reference signal is used for a sensing measurement for a second system.

In the apparatus for obtaining the reference signal information provided by embodiments of the present application, by actively searching the reference signal from the first system, the terminal obtains the reference signal information, and transmits the reference signal information for the first system to the second system network side device accessed by the terminal for the second system to perform sensing measurement, thereby avoiding the defect that the accuracy of the sensing measurement result is low due to the reference signal for the second system network side device accessed by the terminal being weak when arriving at the terminal, effectively improving the accuracy of the sensing measurement result, and reducing radio resources used, by the second system network side device accessed by the terminal, for transmitting the sensing signal.

The apparatus for obtaining the reference signal information provided by the embodiment of the present application may implement the steps of each embodiment corresponding to the aforementioned method for obtaining the reference signal information, and may achieve the same effect. The same parts and beneficial effects as the same method embodiments are not repeated here.

In an embodiment, the reference signal information includes one or more of the following:
standard information of a first system;
bandwidth information of a first system;
frequency band information of a first system;
a network identification number of a first system;
quality information of a reference signal from a first system; or
periodic information of a reference signal from a first system.

In an embodiment, the first system includes one or more of the following:
a WI-FI system, a Bluetooth system, or a communication system of an operator different from the second system.

In an embodiment, the apparatus further includes:
a capability information receiving module, used for receiving sensing measurement capability information transmitted from the terminal, where the sensing measurement capability information includes sensing measurement capability of the terminal for the first system.

In an embodiment, the sensing measurement capability information includes one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

In an embodiment, the apparatus further includes:
a request information transmitting module, used for transmitting search request information, where the search request information is used to indicate the terminal to search a reference signal transmitted from a first system.

In an embodiment, the search request information includes one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

In an embodiment, the search request information is carried in one or more of the following:
high layer signaling, physical layer signaling, or application layer data.

In an embodiment, the apparatus further includes:
an auxiliary information transmitting module, used for transmitting auxiliary information to the terminal, where the auxiliary information is used to assist the terminal in discovering a to-be-searched first system.

In an embodiment, the apparatus further includes:
a configuration information transmitting module, used for transmitting sensing measurement configuration information to the terminal.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable-storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above apparatuses according to the embodiments of the present application may implement all the method steps implemented by the above method embodiments, and may achieve the same effect. The same parts and beneficial effects as the same method embodiments are not repeated here.

An embodiment of the present application further provides a processor-readable storage medium, where the processor-readable storage medium stores a computer program, and the computer program is used to cause a processor to perform the methods for obtaining the reference signal information provided by the above embodiments.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented procedure and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for obtaining reference signal information, performed by a terminal, comprising:
searching a reference signal transmitted from a first system device to obtain reference signal information; and
transmitting the reference signal information to a second system network side device accessed by the terminal,
wherein the reference signal is used for a sensing measurement for a second system.

2. The method of claim 1, wherein the reference signal information comprises one or more of the following:
standard information of the first system;
bandwidth information of the first system;
frequency band information of the first system;
a network identification number of the first system;
quality information of a reference signal from the first system; or
periodic information of a reference signal from the first system.

3. The method of claim 2, wherein the first system comprises one or more of the following:
a WI-FI system, a Bluetooth system, or a communication system of an operator different from the second system.

4. The method of claim 1, further comprising:
transmitting sensing measurement capability information to the second system network side device, wherein the sensing measurement capability information comprises sensing measurement capability of the terminal for the first system.

5. The method of claim 4, wherein the sensing measurement capability information comprises one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

6. The method of any of claims 1 to 5, further comprising:
receiving search request information transmitted from the second system network side device, wherein the search request information is used to indicate the terminal to search a reference signal transmitted from the first system.

7. The method of claim 6, wherein the search request information comprises one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

8. The method of claim 6, wherein the search request information is carried in one or more of the following:
high layer signaling, physical layer signaling, or application layer data.

9. The method of any of claims 1 to 5, further comprising:
searching a reference signal transmitted from the first system based on default search information.

10. The method of any of claims 1 to 5, wherein searching the reference signal transmitted from the first system device to obtain the reference signal information comprises:
in case that a trigger condition is satisfied, searching the reference signal transmitted from the first system device to obtain the reference signal information,
wherein the trigger condition comprises one or more of the following:
a signal quality of the second system network side device received by the terminal is lower than a first threshold; or
a signal quality of a source sensing signal of the second system network side device received by the terminal is lower than a second threshold.

11. The method of any of claims 1 to 5, further comprising:
receiving auxiliary information transmitted from the second system network side device, wherein the auxiliary information is used to indicate to discover a to-be-searched first system.

12. The method of any of claims 1 to 5, further comprising:
receiving sensing measurement configuration information transmitted from the second system network side device; and
performing sensing measurement on a reference signal transmitted from the first system based on the sensing measurement configuration information.

13. A method for obtaining reference signal information, performed by a second system network side device accessed by a terminal, comprising:
receiving reference signal information transmitted from the terminal after searching a reference signal transmitted from a first system device,
wherein the reference signal is used for a sensing measurement for a second system.

14. The method of claim 13, wherein the reference signal information comprises one or more of the following:
standard information of the first system;
bandwidth information of the first system;
frequency band information of the first system;
a network identification number of the first system;
quality information of a reference signal from the first system; or
periodic information of a reference signal from the first system.

15. The method of claim 14, wherein the first system comprises one or more of the following:
a WI-FI system, a Bluetooth system, or a communication system of an operator different from the second system.

16. The method of claim 13, further comprising:
receiving sensing measurement capability information transmitted from the terminal, wherein the sensing measurement capability information comprises sensing measurement capability of the terminal for the first system.

17. The method of claim 16, wherein the sensing measurement capability information comprises one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

18. The method of any of claims 13 to 17, further comprising:
transmitting search request information, wherein the search request information is used to indicate the terminal to search a reference signal transmitted from the first system.

19. The method of claim 18, wherein the search request information comprises one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

20. The method of claim 18, wherein the search request information is carried in one or more of the following:
high layer signaling, physical layer signaling, or application layer data.

21. The method of any of claims 13 to 17, further comprising:
transmitting auxiliary information to the terminal, wherein the auxiliary information is used to assist the terminal in discovering a to-be-searched first system.

22. The method of any of claims 13 to 17, further comprising:
transmitting sensing measurement configuration information to the terminal.

23. A terminal, comprising a memory, a transceiver and a processor,
wherein the memory is used to store a computer program, the transceiver is used to transmit and receive data under control of the processor, and the processor is used to read the computer program in the memory and perform the following operations:
searching a reference signal transmitted from a first system device to obtain reference signal information; and
transmitting the reference signal information to a second system network side device accessed by the terminal,
wherein the reference signal is used for a sensing measurement for a second system.

24. The terminal of claim 23, wherein the reference signal information comprises one or more of the following:
standard information of the first system;
bandwidth information of the first system;
frequency band information of the first system;
a network identification number of the first system;
quality information of a reference signal from the first system; or
periodic information of a reference signal from the first system.

25. The terminal of claim 24, wherein the first system comprises one or more of the following:
a WI-FI system, a Bluetooth system, or a communication system of an operator different from the second system.

26. The terminal of claim 23, wherein the operation further comprises:
transmitting sensing measurement capability information to the second system network side device, wherein the sensing measurement capability information comprises sensing measurement capability of the terminal for the first system.

27. The terminal of claim 26, wherein the sensing measurement capability information comprises one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

28. The terminal of any of claims 23 to 27, wherein the operation further comprises:
receiving search request information transmitted from the second system network side device, wherein the search request information is used to indicate the terminal to search a reference signal transmitted from the first system.

29. The terminal of claim 28, wherein the search request information comprises one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

30. The terminal of claim 28, wherein the search request information is carried in one or more of the following:
high layer signaling, physical layer signaling, or application layer data.

31. The terminal of any of claims 23 to 27, wherein the operation further comprises:
searching a reference signal transmitted from the first system based on default search information.

32. The terminal of any of claims 23 to 27, wherein searching the reference signal transmitted from the first system device to obtain the reference signal information comprises:
in case that a trigger condition is satisfied, searching the reference signal transmitted from the first system device to obtain the reference signal information,
wherein the trigger condition comprises one or more of the following:
a signal quality of the second system network side device received by the terminal is lower than a first threshold; or
a signal quality of a source sensing signal of the second system network side device received by the terminal is lower than a second threshold.

33. The terminal of any of claims 23 to 27, wherein the operation further comprises:
receiving auxiliary information transmitted from the second system network side device, wherein the auxiliary information is used to indicate to discover a to-be-searched first system.

34. The terminal of any of claims 23 to 27, wherein the operation further comprises:
receiving sensing measurement configuration information transmitted from the second system network side device; and
performing sensing measurement on a reference signal transmitted from the first system based on the sensing measurement configuration information.

35. A network side device, comprising a memory, a transceiver and a processor,
wherein the memory is used to store a computer program, the transceiver is used to transmit and receive data under control of the processor, and the processor is used to read the computer program in the memory and perform the following operations:
receiving reference signal information transmitted from the terminal after searching a reference signal transmitted from a first system device,
wherein the reference signal is used for a sensing measurement for a second system.

36. The network side device of claim 35, wherein the reference signal information comprises one or more of the following:
standard information of the first system;
bandwidth information of the first system;
frequency band information of the first system;
a network identification number of the first system;
quality information of a reference signal from the first system; or
periodic information of a reference signal from the first system.

37. The network side device of claim 36, wherein the first system comprises one or more of the following:
a WI-FI system, a Bluetooth system, or a communication system of an operator different from the second system.

38. The network side device of claim 35, wherein the operation further comprises:
receiving sensing measurement capability information transmitted from the terminal, wherein the sensing measurement capability information comprises sensing measurement capability of the terminal for the first system.

39. The network side device of claim 38, wherein the sensing measurement capability information comprises one or more of the following:
standard information of the first system for the terminal supporting the sensing measurement;
bandwidth information of the first system for the terminal supporting the sensing measurement;
frequency band information of the first system for the terminal supporting the sensing measurement; or
reference signal information for the terminal supporting the sensing measurement.

40. The network side device of any of claims 35 to 39, wherein the operation further comprises:
transmitting search request information, wherein the search request information is used to indicate the terminal to search a reference signal transmitted from the first system.

41. The network side device of claim 40, wherein the search request information comprises one or more of the following:
standard information of the first system indicating search for the terminal;
bandwidth information of the first system indicating search for the terminal;
frequency band information of the first system indicating search for the terminal;
expected reporting time of the reference signal information;
reporting threshold information of the reference signal information; or
a period threshold of the reference signal used for the sensing measurement.

42. The network side device of claim 40, wherein the search request information is carried in one or more of the following:
high layer signaling, physical layer signaling, or application layer data.

43. The network side device of any of claims 35 to 39, wherein the operation further comprises:
transmitting auxiliary information to the terminal, wherein the auxiliary information is used to assist the terminal in discovering a to-be-searched first system.

44. The network side device of any of claims 35 to 39, wherein the operation further comprises:
transmitting sensing measurement configuration information to the terminal.

45. An apparatus for obtaining reference signal information, comprising:
a searching module, used for searching a reference signal transmitted from a first system device to obtain reference signal information; and
a transmitting module, used for transmitting the reference signal information to a second system network side device accessed by the terminal,
wherein the reference signal is used for a sensing measurement for a second system.

46. An apparatus for obtaining reference signal information, comprising:
an information receiving module, used for receiving reference signal information transmitted from the terminal after searching a reference signal transmitted from a first system device,
wherein the reference signal is used for a sensing measurement for a second system.

47. A processor-readable storage medium, wherein the processor-readable storage medium stores a computer program, and the computer program is used to cause a processor to perform the method of any of claims 1 to 22.
